# EUROPÄISCHE PATENTSCHRIFT

(11) **EP 0 548 323 B1**
(45) Veröffentlichungstag und Bekanntmachung des Hinweises auf die Patenterteilung: **15.05.1996**
(21) Anmeldenummer: 92914912.8
(22) Anmeldetag: 08.07.1992
(51) Int. Cl.: C09K 19/30

(54) **FLÜSSIGKRISTALLINES MEDIUM**
LIQUID-CRYSTAL MATERIAL
MILIEU A CRISTAUX LIQUIDES

(30) Priorität: 16.07.1991 DE 4123539
(43) Veröffentlichungstag der Anmeldung: 30.06.1993
(73) Patentinhaber: MERCK PATENT GmbH, D-64271 Darmstadt (DE)
(72) Erfinder: PLACH, Herbert, D-6100 Darmstadt (DE); HITTICH, Reinhard, D-6101 Modautal 1 (DE); POETSCH, Eike, D-6109 Mühltal (DE); REIFFENRATH, Volker, D-6101 Rossdorf (DE)
(86) Internationale Anmeldenummer: EP9201541
(87) Internationale Veröffentlichungsnummer: WO9302153

(56) Entgegenhaltungen:
- WO-A-91/08184
- WO-A-91/15450
- WO-A-91/16291
- WO-A-91/16394
- WO-A-91/16396
- WO-A-91/17135

## Beschreibung

Die vorliegende Erfindung betrifft ein flüssigkristallines Medium, dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beeinflußt werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-zellen (Deformation aufgerichteter Phasen), Gast/Wirt-Zellen, TN-Zellen mit verdrillt nematischer ("twisted nematic") Struktur, STN-Zellen ("super-twisted nematic"), SBE-Zellen ("super-birefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mescphase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, daß die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand guter UV- und Temperaturstabilität des Widerstands und geringem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, daß je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfaßt hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, daß der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, daß auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- Schaltbarkeit bei extrem tiefen Temperaturen (out-door-use, Automobil, Avionik)
- Erhöhte Beständigkeit gegenüber UV-Strahlung (längere Lebensdauer)

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannungen und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Der Erfindung liegt die Aufgabe zugrunde, Medien insbesondere für derartige MFK-, TN- oder STN-Anzeigen bereitzustellen, die die oben angegebenen Nachteile nicht oder nur in geringerem Maße, und vorzugsweise gleichzeitig sehr hohe spezifische Widerstände und niedrige Schwellenspannungen aufweisen.

Es wurde nun gefunden, daß diese Aufgabe gelöst werden kann, wenn man in Anzeigen erfindungsgemäße Medien verwendet.

Gegenstand der Erfindung ist somit ein flüssigkristallines Medium auf der Basis eines Gemisches von polaren Verbindungen mit positiver dielektrischer Anisotropie, dadurch gekennzeichnet, daß es eine oder mehrere Verbindungen der allgemeinen Formel I

Flüssigkristallines Medium auf der Basis eines Gemisches von polaren Verbindungen mit positiver dielektrischer Anisotropie, dadurch gekennzeichnet, daß es eine oder mehrere Verbindungen der allgemeinen Formel I 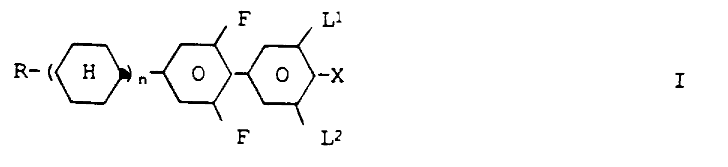 enthält, worin
L¹ und L jeweils H oder F,
n 1 oder 2,
X H, F, Cl, CF₃, OCF₃ oder OCHF₂ und
R Alkyl, Oxaalkyl, Fluoralkyl oder Alkenyl mit jeweils bis zu 7 C-Atomen bedeutet.

Gegenstand der Erfindung sind auch elektrooptische Anzeigen (insbesondere STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes.

Die erzielbaren Kombinationen aus Klärpunkt, Viskosität bei tiefer Temperatur, thermischer und W-Stabilität und dielektrischer Anisotropie übertreffen bei weitem bisherige Materialien aus dem Stand der Technik.

Die Forderung nach hohem Klärpunkt, nematischer Phase bei -40 °C sowie einem hohen Δε konnte bislang nur unzureichend erfüllt werden. Systeme wie z.B. ZLI-3119 weisen zwar vergleichbaren Klärpunkt und vergleichbar günstige Viskositäten auf, besitzen jedoch ein Δε von nur +3.

Andere Mischungs-Systeme besitzen vergleichbare Viskositäten und Werte von Δε, weisen jedoch nur Klärpunkte in der Gegend von 60 °C auf.

Die erfindungsgemäßen Flüssigkristallmischungen ermöglichen es bei niedrigen Viskositäten bei tiefen Temperaturen (bei -30 °C ≤ 600, vorzugsweise ≤ 550 mPa.S; bei -40 °C ≤ 2000, vorzugsweise ≤ 1800 mPa.s) gleichzeitig dielektrische Anisotropiewerte Δε ≥ 3,5, vorzugsweise ≥ 4,0, Klärpunkte oberhalb 65°, vorzugsweise oberhalb 70° und einen hohen Wert für den spezifischen Widerstand zu erreichen, wodurch hervorragende STN- und MKF-Anzeigen erzielt werden können.

Es versteht sich, daß durch geeignete Wahl der Komponenten der erfindungsgemäßen Mischungen auch höhere Klärpunkte (z.B. oberhalb 90°) bei höheren Schwellenspannung oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringeren Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum eine kleinerere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Die Viskosität bei 20 °C ist vorzugsweise < 25 mPa.s. Der nematische Phasenbereich ist vorzugsweise mindestens 70°, insbesondere mindestens 80°. Vorzugsweise erstreckt sich dieser Bereich mindestens von -30° bis +70°.

Messungen des "Capacity Holding-ratio" (HR) [S. Matsumoto et al., Liquid Crystals 5, 1320 (1989) ; K. Niwa et al., Proc. SID Conference, San Francisco, June 1984, p. 304 (1984); G. Weber et al., Liquid Crystals 5, 1381 (1989)] haben ergeben, daß erfindungsgemäße Mischungen enthaltend Verbindungen der Formel I eine deutlich kleinere Abnahme des HR mit steigender Temperatur aufweisen als analoge Mischungen enthaltend anstelle den Verbindungen der Formel I Cyanophenylcyclohexane der Formel

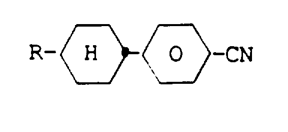

Auch die UV-Stabilität der erfindungegemäßen Mischungen ist erheblich besser, d. h. sie zeigen eine deutlich kleinere Abnahme des HR unter UV-Belastung.

Die erfindungsgemäßen Medien zeichnen sich neben ungewöhnlich weitem nematischen Phasenbereich auch durch außerordentlich hohe elastische Konstanten bei sehr günstigen Viskositätswerten aus, wodurch insbesondere bei Verwendung in STN-Anzeigen deutlich Vorteile gegenüber Medien aus dem Stand der Technik resultieren.

Vorzugsweise basieren die erfindungsgemäßen Medien auf mehreren (vorzugsweise zwei oder mehr) Verbindungen der Formel I, d.h. der Anteil dieser Verbindungen ist 3-80 %, vorzugsweise 7-40 % und besonders bevorzugt im Bereich von 7-25 %.

Die einzelnen Verbindungen der Formeln I bis XIV und deren Unterformeln, die in den erfindungsgemäßen Medien verwendet werden können, sind entweder bekannt, oder sie können analog zu den bekannten Verbindungen hergestellt werden.

Bevorzugte Ausführungsformen sind im folgenden angegeben:
- Medium enthält zusätzlich eine oder mehrere Verbindungen ausgewählt aus der Gruppe bestehend aus den allgemeinen Formel II, III und IV: 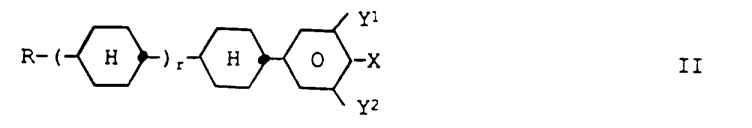 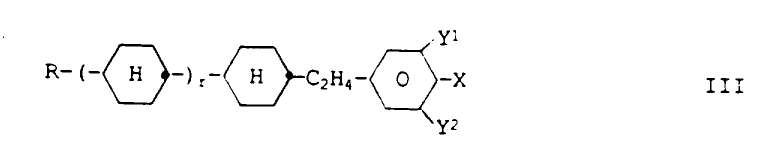 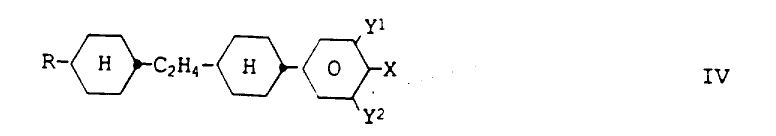 worin die einzelnen Reste die folgenden Bedeutungen haben:
   - R:: Alkyl, Oxaalkyl, Fluoralkyl oder Alkenyl mit jeweils bis zu 7 C-Atomen
   - X:: F, Cl, CF₃, OCF₃ oder OCHF₂
   - Y¹ und Y:: jeweils unabhängig voneinander H oder F
   - r:: 0 oder 1.
- Medium enthält zusätzlich eine oder mehrere Verbindungen ausgewählt aus der Gruppe bestehend aus den allgemeinen Formeln V bis VIII: 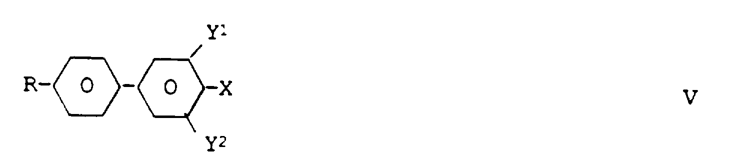 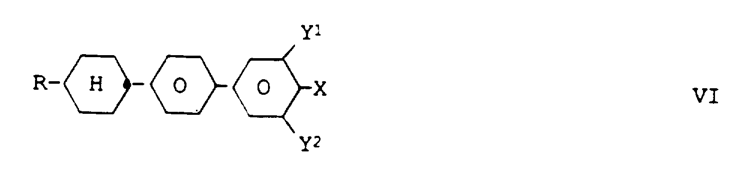 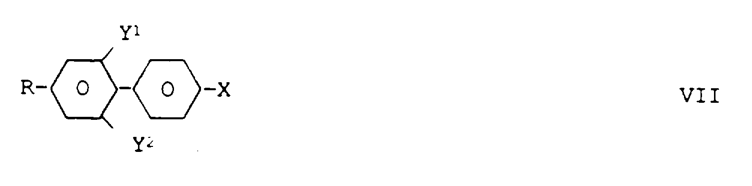 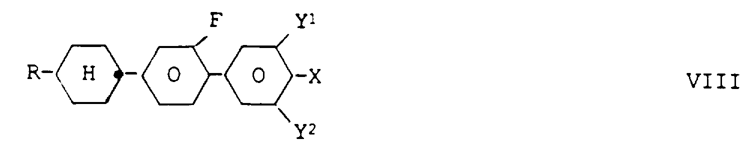 worin R, X und Y¹ und Y jeweils unabhängig voneinander eine der in Anspruch 2 angegebene Bedeutung haben.
- Medium enthält zusätzlich eine oder mehrere Verbindungen ausgewählt aus der Gruppe bestehend aus der allgemeinen Formel IX bis XIV: 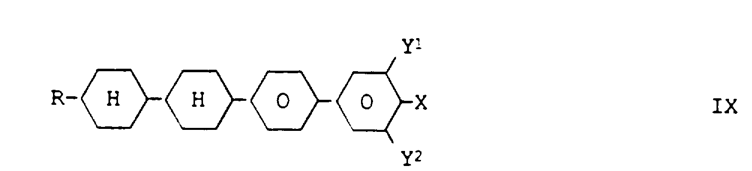 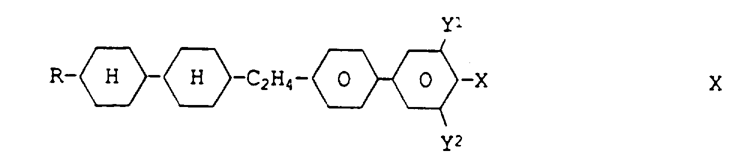 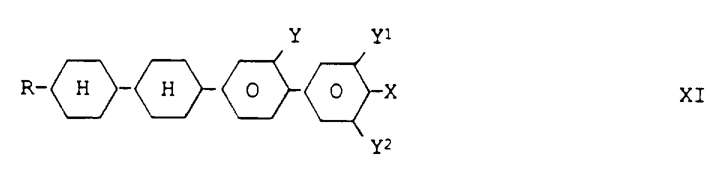 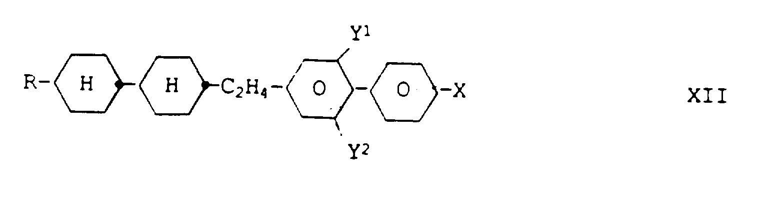 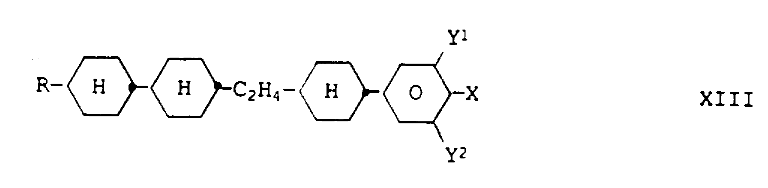 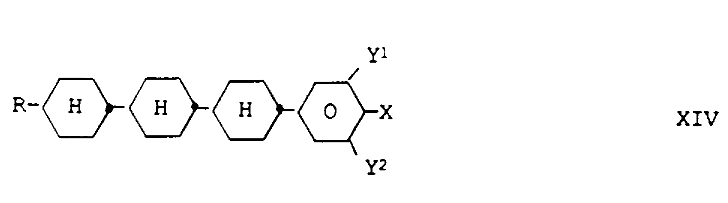 worin R, X und Y¹ und Y jeweils unabhängig voneinander eine der in Anspruch 2 angegebene Bedeutung haben.
- Der Anteil an Verbindungen der Formeln I bis IV zusammen beträgt im Gesamtgemisch mindestens 40 Gew.-%
- der Anteil an Verbindungen der Formel I beträgt im Gesamtgemisch 3 bis 80 Gew.-%
- der Anteil an Verbindungen der Formeln II bis IV im Gesamtgemisch beträgt 20 bis 80 Gew.-%
- 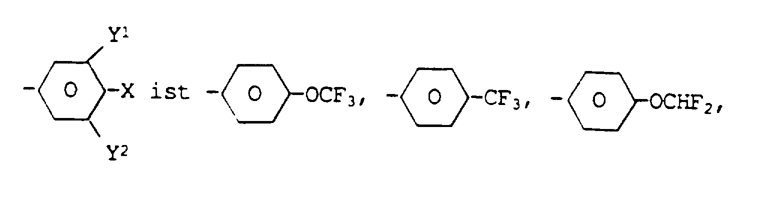 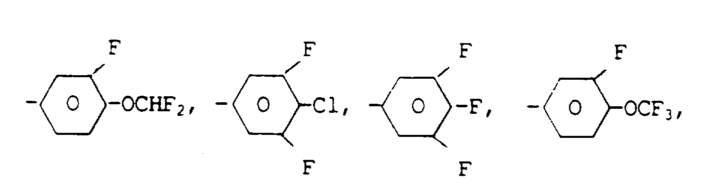 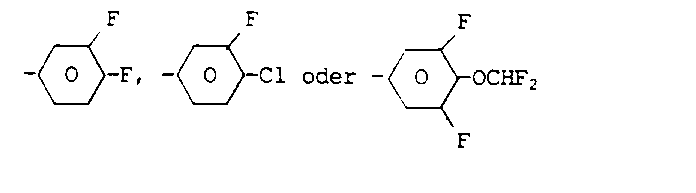
- das Medium enthält Verbindungen der Formeln II und III oder IV
- R ist geradkettiges Alkyl oder Alkenyl mit 2 bis 7 C-Atomen
- das Medium besteht im wesentlichen aus Verbindungen der Formeln I bis IV
- das Medium enthält weitere Verbindungen, vorzugsweise ausgewählt aus der folgenden Gruppe: 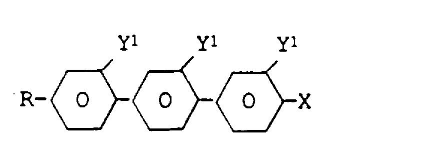 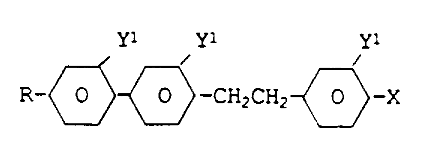 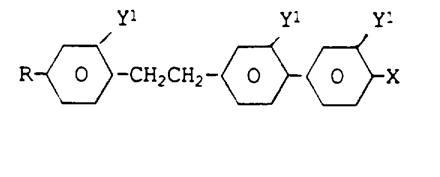
- Das Gewichtsverhältnis I: (II + III + IV) ist vorzugsweise 1 : 10 bis 1 : 1.
- Medium besteht im wesentlichen aus aus Verbindungen ausgewählt aus der Gruppe bestehend aus den allgemeinen Formeln I bis XIV.
- n ist 1.

Es wurde gefunden, daß bereits ein relativ geringer Anteil an Verbindungen der Formel I im Gemisch mit üblichen Flüssigkristallmaterialien, insbesondere jedoch mit einer oder mehreren Verbindungen der Formel II, III und/oder IV zu einer beträchtlichen Verbesserung der Ansprechzeiten und zu niedrigen Schwellenspannungen führt, wobei gleichzeitig breite nematische Phasen mit tiefen Übergangstemperaturen smektischnematisch beobachtet werden. Die Verbindungen der Formeln I bis IV sind farblos, stabil und untereinander und mit anderen Flüssigkristallmaterialien gut mischbar.

Der Ausdruck "Alkyl" umfaßt geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 2-5 Kohlenstoffatomen sind im allgemeinen bevorzugt.

Der Ausdruck "Alkenyl" umfaßt geradkettige und verzweigte Alkenylgruppen mit 2-7 Kohlenstoffatomen, insbesondere die geradkettigen Gruppen. Besonders Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfaßt vorzugsweise geradkettige Gruppen mit endständigen Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfaßt vorzugsweise geradkettige Reste der Formel CₙH₂ₙ₊₁-O-(CH₂)ₘ, worin n und m jeweils unabhängig voneinander 1 bis 6 bedeuten. Vorzugsweise ist n = 1 und m 1 bis 6.

Durch geeignete Wahl der Bedeutungen von R, X und Y können die Ansprechzeiten, die Schwellenspannung, die Steilheit der Transmissionskennlinien etc. in gewünschter Weise modifiziert werden. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten. Eine Gruppe -CH₂CH₂- in Z¹ bzw. Z führt im allgemeinen zu höheren Werte von k₃₃/k₁₁ im Vergleich zu einer einfachen Kovalenzbindung. Höhere Werte von k₃₃/k₁₁ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Verbindungen der Formeln I und II + III + IV hängt weitgehend von den gewünschten Eigenschaften, von der Wahl der Komponenten der Formeln I, II, III und/oder IV und von der Wahl weiterer gegebenenfalls vorhandener Komponenten ab. Geeignete Mengenverhältnisse innerhalb des oben angegebenen Bereichs können von Fall zu Fall leicht ermittelt werden.

Die Gesamtmenge an Verbindungen der Formeln I bis XIV in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln I bis XIV ist.

In einer besonders bevorzugten Ausführungsform enthalten die erfindungsgemäßen Medien Verbindungen der Formel II, III, V und/oder VII (vorzugsweise II und/oder III), worin X CF₃, OCF₃ oder OCHF₂ bedeutet. Eine günstige synergistische Wirkung mit den Verbindungen der Formel I führt zu besonders vorteilhaften Eigenschaften.

Für STN-Anwendungen enthalten die Medien vorzugsweise Verbindungen ausgewählt aus der Gruppe bestehend aus den Formeln V bis VIII, worin X vorzugsweise OCHF₂ bedeutet.

Die erfindungsgemäßen Medien können ferner eine Komponente A enthalten bestehend aus einer oder mehreren Verbindungen mit einer dielektrischen Anisotropie von -1,5 bis +1,5 der allgemeinen Formel I' 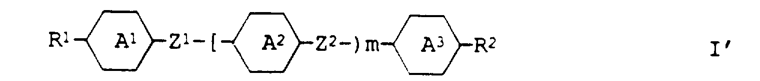 worin
- R¹ und R: jeweils unabhängig voneinander n-Alkyl, ω-Fluoralkyl oder n-Alkenyl mit bis zu 9 C-Atomen,
- die Ringe A¹, A und A³: jeweils unabhängig voneinander 1,4-Phenylen, 2-oder 3-Fluor-1,4-phenylen, trans-1,4-Cyclohexylen oder 1,4-Cyclohexenylen,
- Z¹ und Z: jeweils unabhängig voneinander -CH₂CH₂-, C≡C-, -CO-O-, -O-CO-, oder eine Einfachbindung,
und
- m: 0, 1 oder 2 bedeutet.

Komponente A enthält vorzugsweise eine oder mehrere Verbindungen ausgewählt aus der Gruppe bestehend aus II1 bis II7: 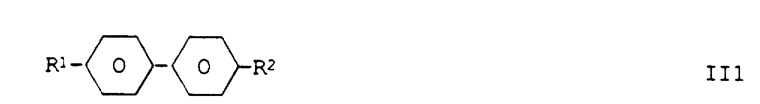 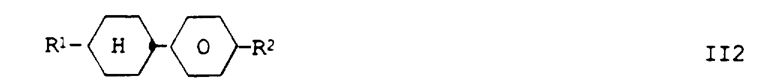 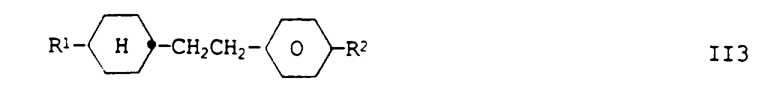 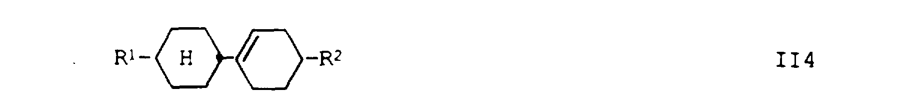 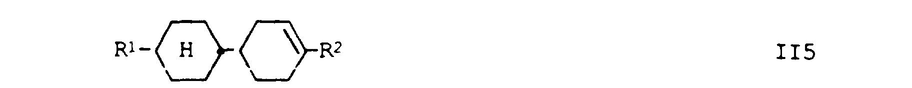 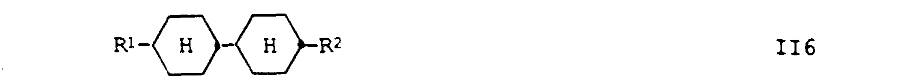 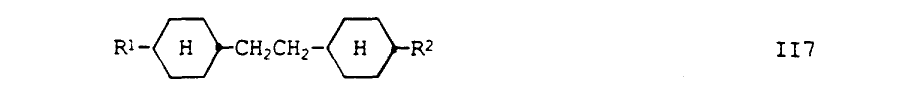 worin R¹ und R die bei Formel I' angegebene Bedeutung haben.

Vorzugsweise enthält Komponente A zusätzlich eine oder mehrere Verbindungen ausgewählt aus der Gruppe bestehend aus II8 bis II20: 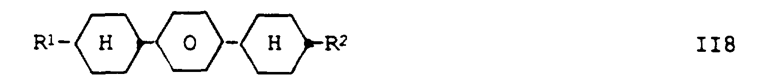 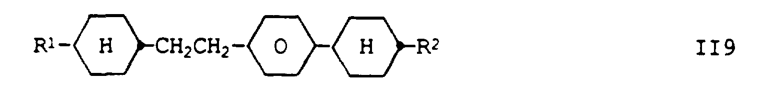 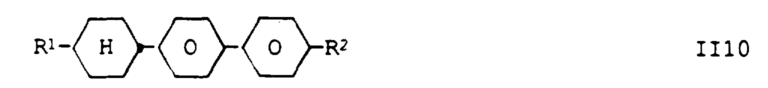 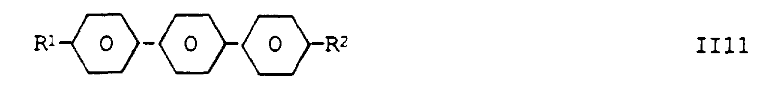 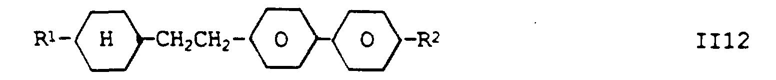 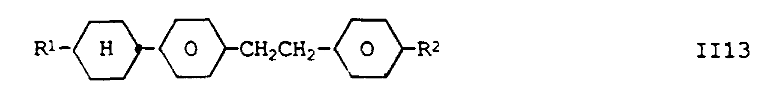 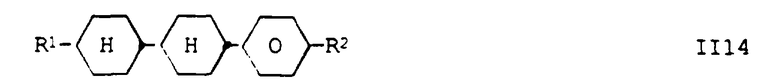 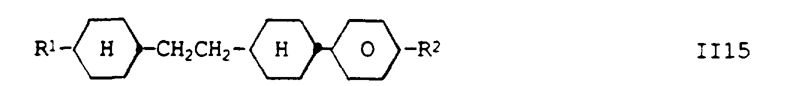 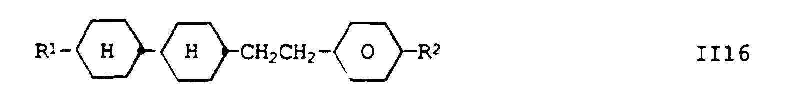 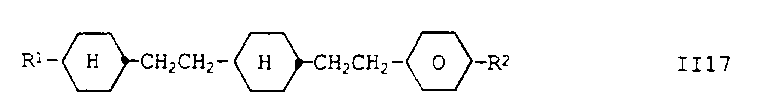 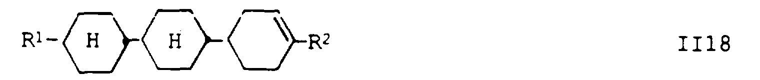 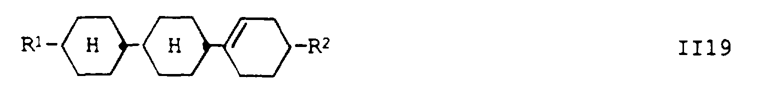 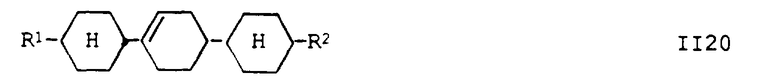 worin R¹ und R die bei Formel I' angegebene Bedeutung haben und die 1,4-Phenylengruppen in II8 bis II17 jeweils unabhängig voneinander auch durch Fluor ein- oder mehrfach substituiert sein können.

Ferner enthält Komponente A vorzugsweise zusätzlich eine oder mehrere Verbindungen ausgewählt aus der Gruppe bestehend aus II21 bis II25: 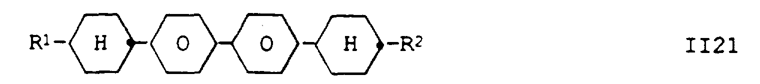 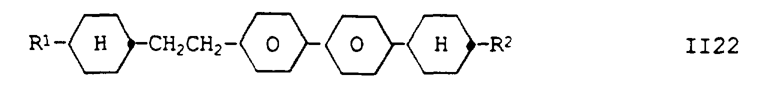 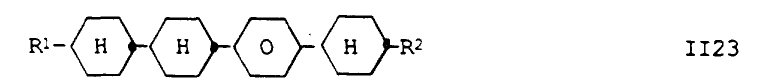 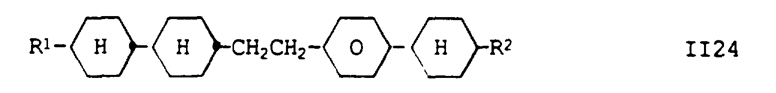 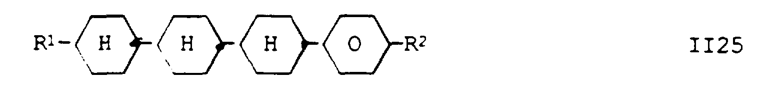 worin R¹ und R die bei Formel I' angegebene Bedeutung haben und die 1,4-Phenylengruppen in II21 bis II25 jeweils unabhängig voneinander auch durch Fluor ein- oder mehrfach substituiert sein können.

Schließlich sind derartige Mischungen bevorzugt, deren Komponente A eine oder mehrere Verbindungen ausgewählt aus der Gruppe bestehend aus II26 und II27 enthält: 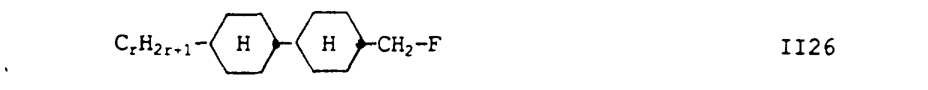 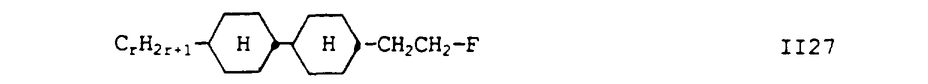 worin CᵣH₂ᵣ₊₁ eine geradkettige Alkylgruppe mit bis zu 7 C-Atomen ist.

In einigen Fällen erweist sich der Zusatz von Verbindungen der Formel 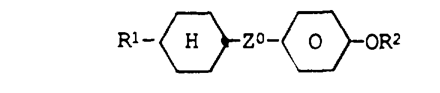 worin
R¹ und R die bei Formel I' angegebene Bedeutung haben
und Z⁰ eine Einfachbindung, -CH₂CH₂-, 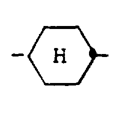 oder 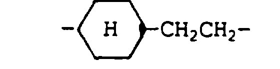 bedeutet,
zur Unterdrückung smektischer Phasen als vorteilhaft, obwohl hierdurch der spezifische Widerstand erniedrigt werden kann. Zur Erzielung von für die Anwendung optimaler Parameterkombinationen kann der Fachmann leicht feststellen, ob und falls ja in welcher Menge diese Verbindungen zugesetzt sein können. Normalerweise werden weniger als 15 %, insbesondere 5-10 % verwendet.

Ferner bevorzugt sind Flüssigkristallmischungen, die eine oder mehrere Verbindungen ausgewählt aus der Gruppe bestehend aus III' und IV' enthalten: 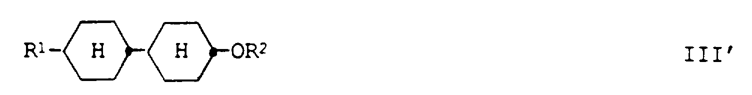 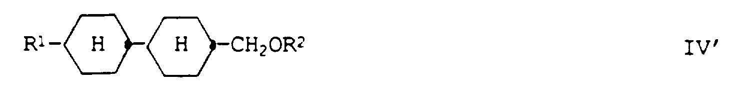 worin R¹ und R die bei Formel I' angegebene Bedeutung haben.

Die Art und Menge der polaren Verbindungen mit positiver dielektrischer Anisotropie ist an sich nicht kritisch. Der Fachmann kann unter einer großen Palette bekannter und in vielen Fällen auch kommerziell verfügbarer Komponenten und Basisgemische in einfachen Routineversuchen geeignete Materialien auswählen. Vorzugsweise enthalten die erfindungsgemäßen Medien eine oder mehrere Verbindungen der Formel I" 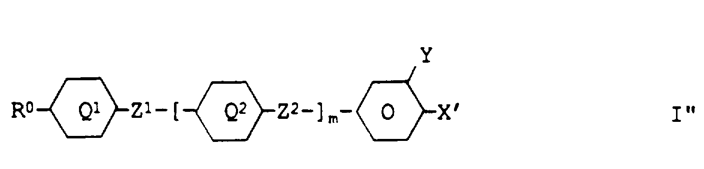 worin Z¹, Z und m die bei Formel I' angegebene Bedeutung haben, Q¹ und Q jeweils unabhängig voneinander 1,4-Phenylen, trans-1,4-Cyclohexylen oder 3-Fluor-1,4-phenylen- oder einer der Reste Q¹ und Q auch trans-1,3-Dioxan-2,5-diyl, Pyrimidin-2,5-diyl, Pyridin-2,5-diyl oder 1,4-Cyclohexenylen bedeutet, R⁰ n-Alkyl, n-Alkenyl, n-Alkoxy oder n-Oxaalkyl mit jeweils bis zu 9 C-Atomen, Y H oder F und X' CN, Halogen, CF₃, OCF₃ oder OCHF₂ ist.

In einer bevorzugten Ausführungsform basieren die erfindungsgemäßen Medien für STN- oder TN-Anwendungen auf Verbindungen der Formel I" worin X' CN bedeutet. Es versteht sich, daß auch kleinere oder größere Anteile von anderen Verbindungen der Formel I" (X' # CN) in Frage kommen. Für MFK-Anwendungen enthalten die erfindungsgemäßen Medien vorzugsweise nur bis zu ca. 10 % an Nitrilen der Formel I" (vorzugsweise jedoch keine Nitrile der Formel I", sondern Verbindungen der Formel I' mit X' = Halogen, CF₃, OCF₃ oder OCHF₂). Diese Medien basieren vorzugsweise auf den Verbindungen der Formeln II bis XII.

Der Aufbau der erfindungsgemäßen STN- bzw. MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefaßt und umfaßt auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden.

C bedeutet eine kristalline, S eine smektische, S_{B} eine smektisch B, N eine nematische und I die isotrope Phase.

V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2,5-fachen Wert von V₁₀. Δn bezeichnet die optische Anisotropie und nₒ den Brechungsindex. Δε bezeichnet die dielektrische Anisotropie (Δε = ε_{||} - ε_{⊥} wobei ε_{||} die Dielektrizitätskonstante parallel zu den Moleküllängsachsen und ε_{⊥} die Dielektrizitätskonstante senkrecht dazu bedeutet. Die elektrooptischen Daten wurden in einer TN-Zelle im 1. Minimum (d.h. bei einem d Δn-Wert von 0,5) bei 20 °C gemessen, sofern nicht ausdrücklich etwas anderes angegeben wird. Die optischen Daten wurden bei 20 °C gemessen, sofern nicht ausdrücklich etwas anderes angegeben wird.

Die folgenden Beispiele sollen die Erfindung erläutern, ohne sie zu begrenzen. Vor und nachstehend sind alle Temperaturen in °C angegeben. Die Prozentzahlen sind Gewichtsprozente.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ sind geradkettige Alkylreste mit n bzw. m C-Atomen. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten R¹, R, L¹, L und L³:

| Code für R¹ R, L¹, L | R¹ | R | L¹ | L | L³ |
|---|---|---|---|---|---|
| nm | CₙH₂ₙ₊₁ | CₘH₂ₘ₊₁ | H | H | H |
| nOm | CₙH₂ₙ₊₁ | OCₘH₂ₘ₊₁ | H | H | H |
| nO.m | CₙH₂ₙ₊₁ | CₘH₂ₘ₊₁ | H | H | H |
| n | CₙH₂ₙ₊₁ | CN | H | H | H |
| nN.F | CₙH₂ₙ₊₁ | CN | H | H | H |
| nF | CₙH₂ₙ₊₁ | F | H | H | H |
| nOF | CₙH₂ₙ₊₁ | F | H | H | H |
| nCl | CₙH₂ₙ₊₁ | Cl | H | H | H |
| nF.F | CₙH₂ₙ₊₁ | F | H | F | H |
| nOmFF | CₙH₂ₙ₊₁ | OCₘH₂ₘ₊₁ | F | F | H |
| nmF | CₙH₂ₙ₊₁ | OCₘH₂ₘ₊₁ | F | H | H |
| nCF₃ | CₙH₂ₙ₊₁ | CF₃ | H | H | H |

| Code für R¹ R, L¹, L | R¹ | R | L¹ | L | L³ |
|---|---|---|---|---|---|
| nOCF₃ | CₙH₂ₙ₊₁ | OCF₃ | H | H | H |
| nOCF₂ | CₙH₂ₙ₊₁ | OCHF₂ | H | H | H |
| nS | CₙH₂ₙ₊₁ | NCS | H | H | H |
| rVsN | CₙH₂ₙ₊₁-CH=CH-CₛH₂ₛ- | CN | H | H | H |
| rEsN | CₙH₂ₙ₊₁-O-CₛH₂ₛ- | CN | H | H | H |
| nNF | CₙH₂ₙ₊₁ | CN | F | H | H |
| nAm | CₙH₂ₙ₊₁ | COOCₘH₂ₘ₊₁ | H | H | H |
| nF.F.F | CₙH₂ₙ₊₁ | F | H | F | F |
| nF.F.F.F | CₙH₂ₙ₊₁ | F | F | F | F |
| nOCF₂.F.F | CₙH₂ₙ₊₁ | OCHF₂ | H | F | F |
| nCl.F.F | CₙH₂ₙ₊₁ | Cl | H | F | F |
| nCF₃.F.F | CₙH₂ₙ₊₁ | CF₃ | H | F | F |
| nOCF₃.F.F | CₙH₂ₙ₊₁ | OCF₃ | H | F | F |

### Tabelle A:

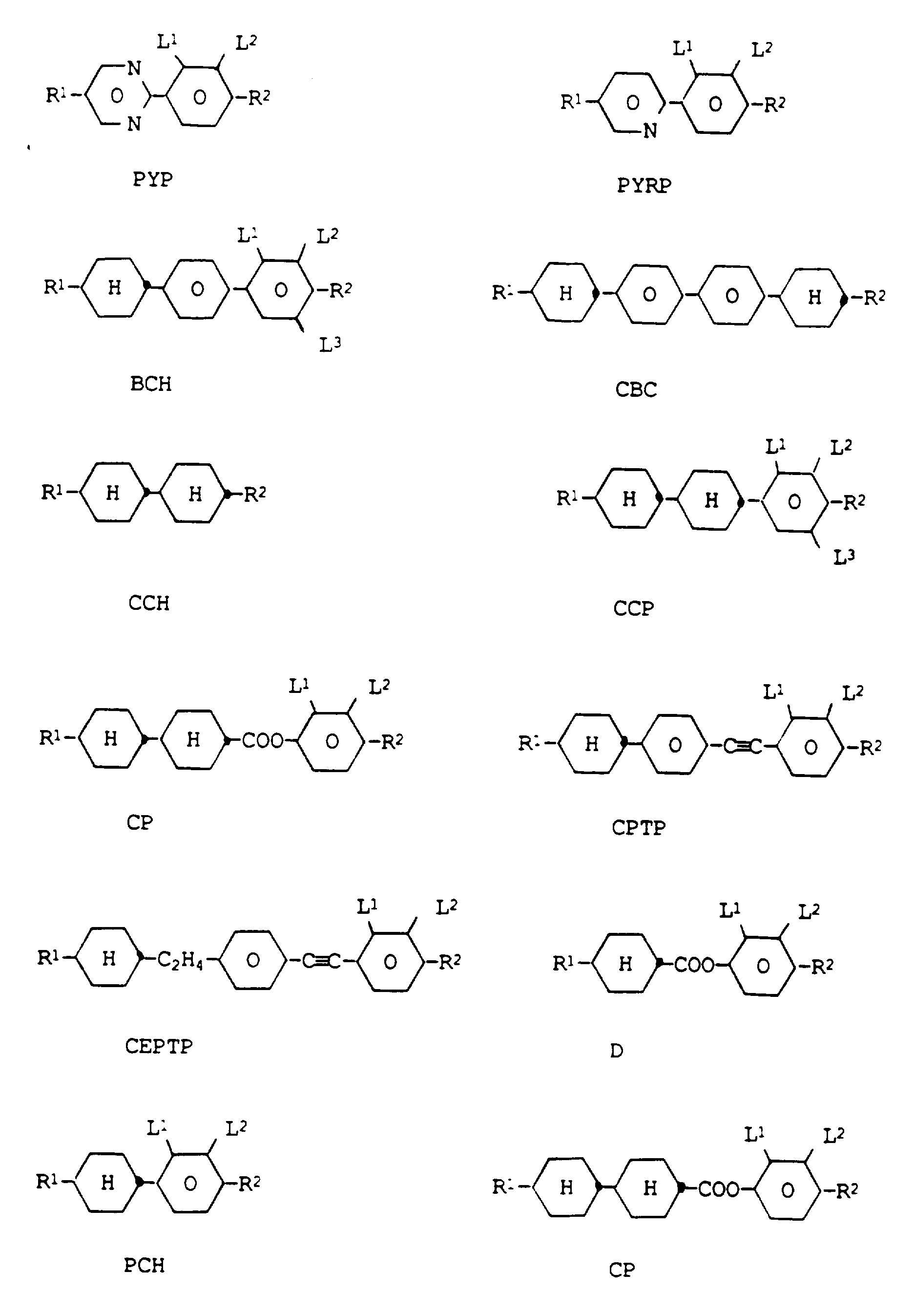

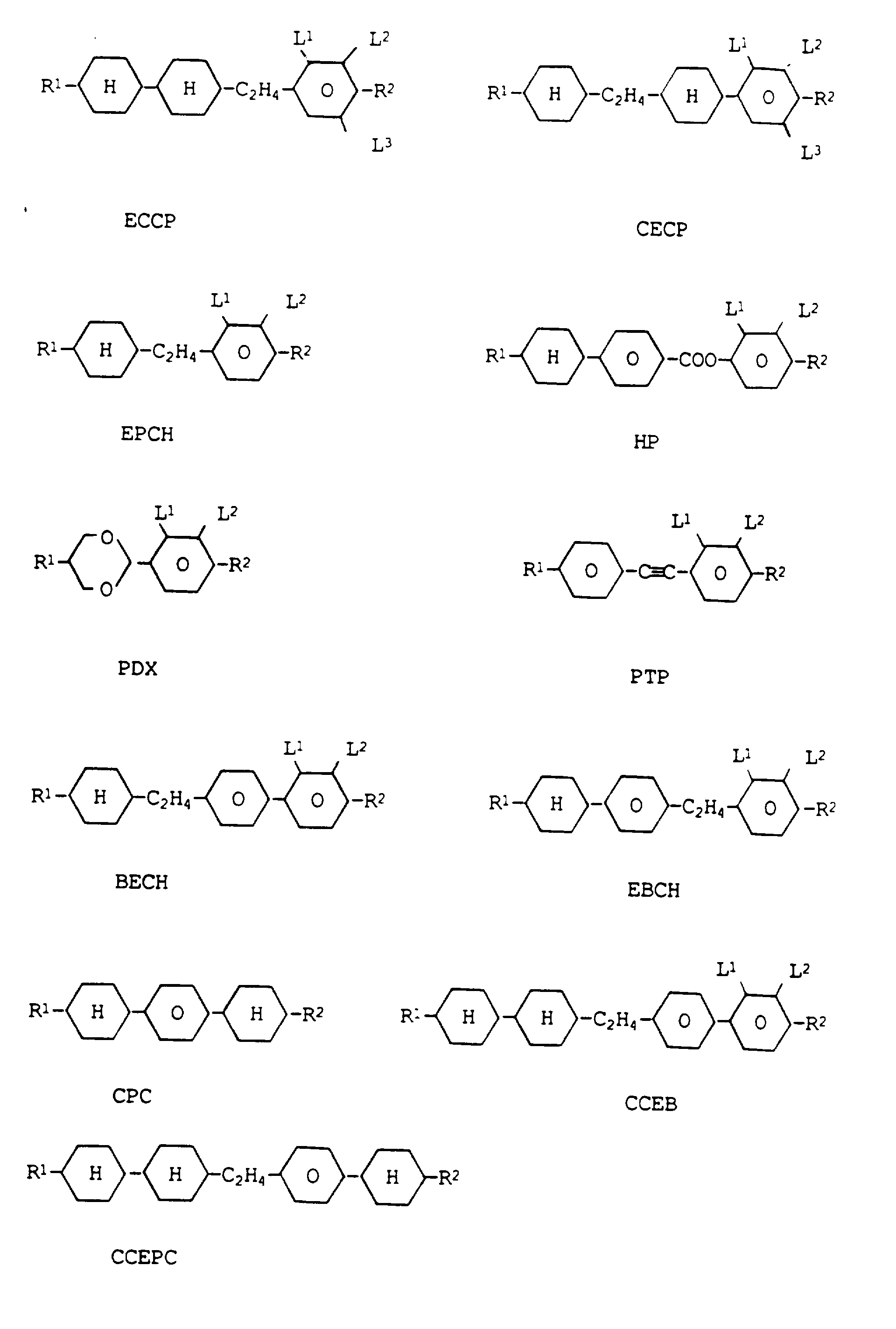

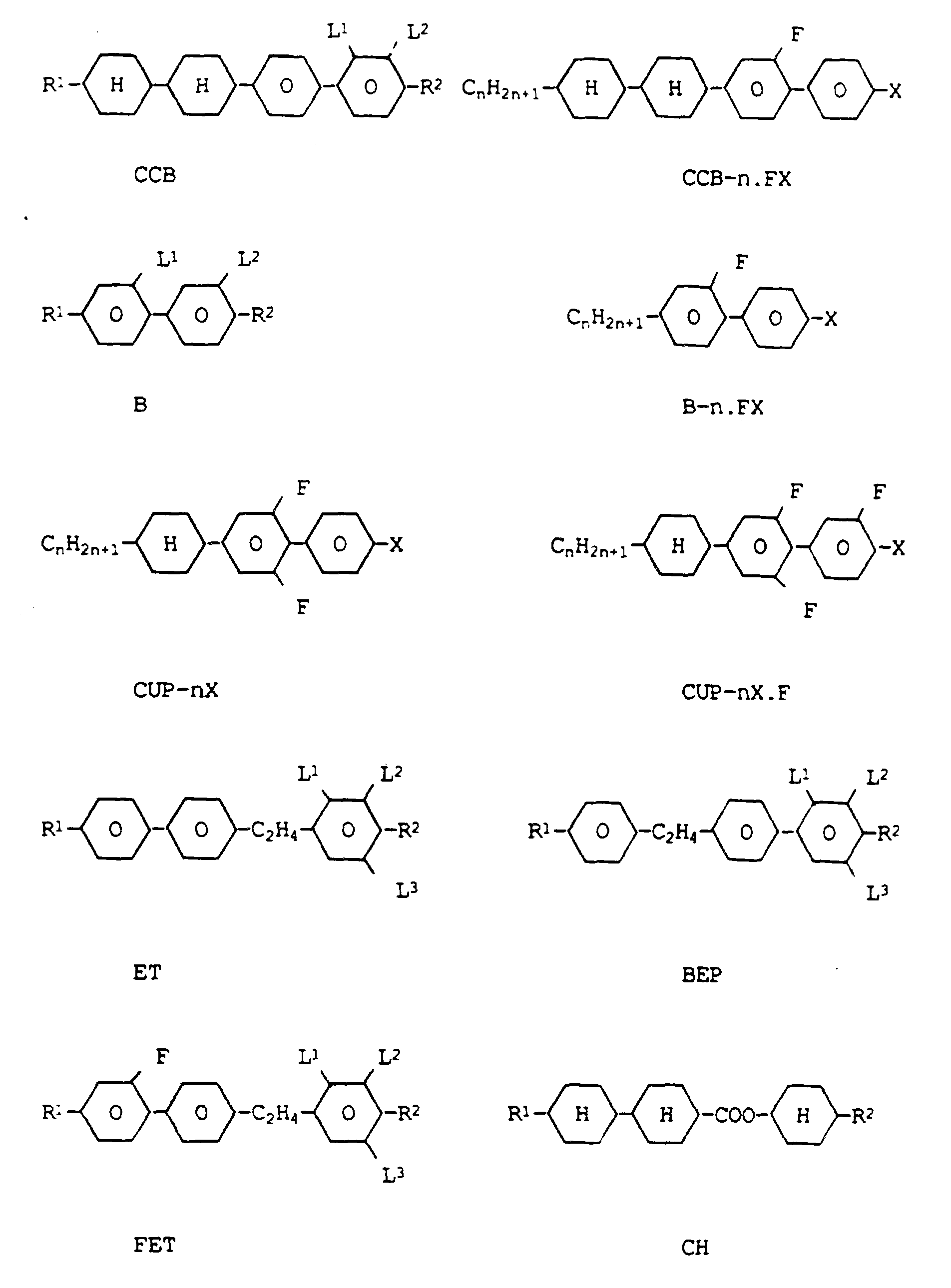

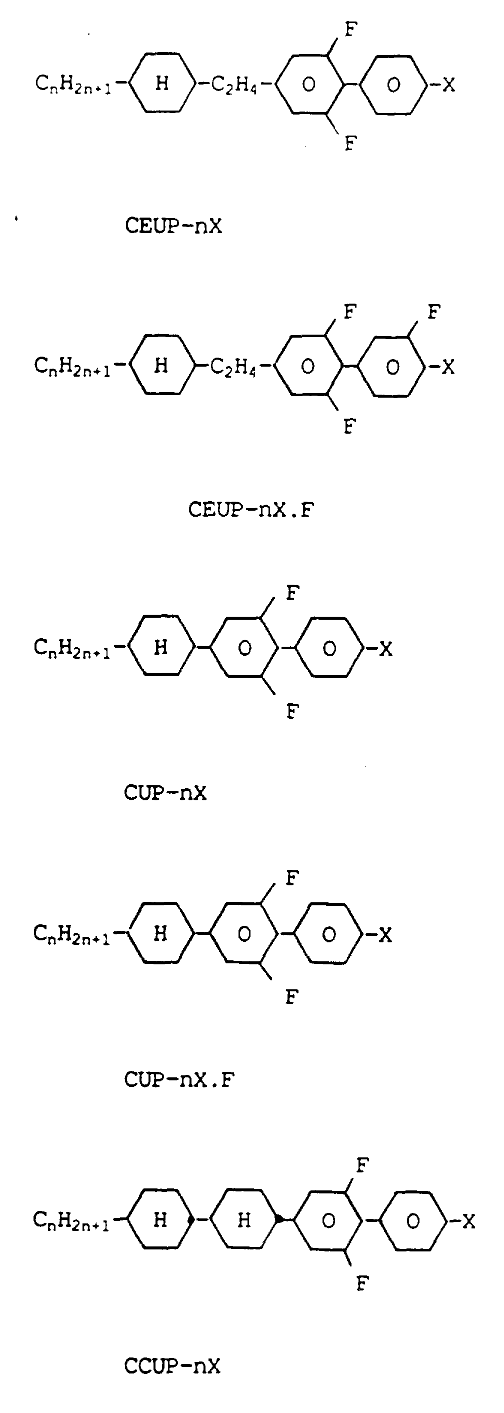

### Tabelle B:

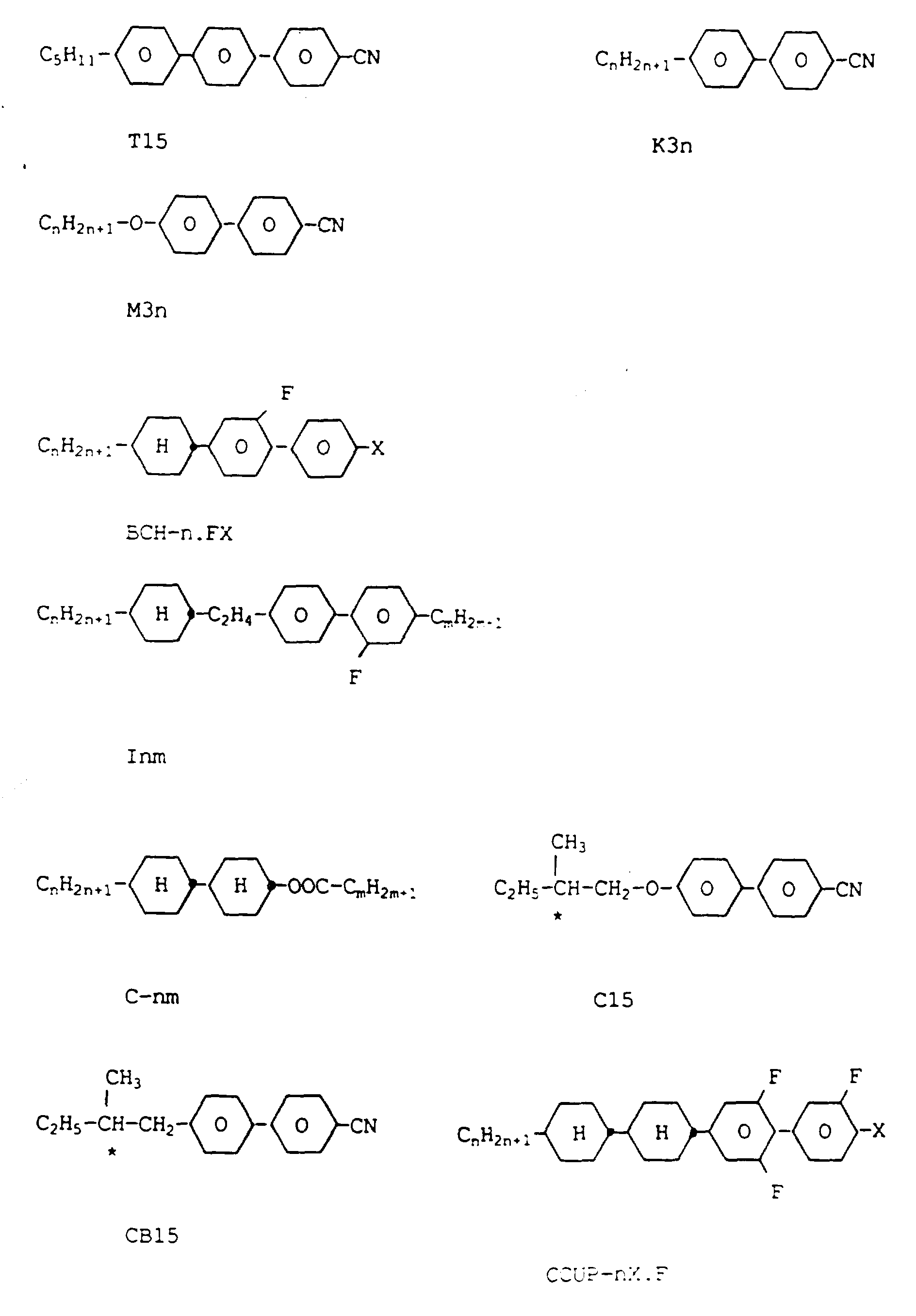

### Tabelle B:

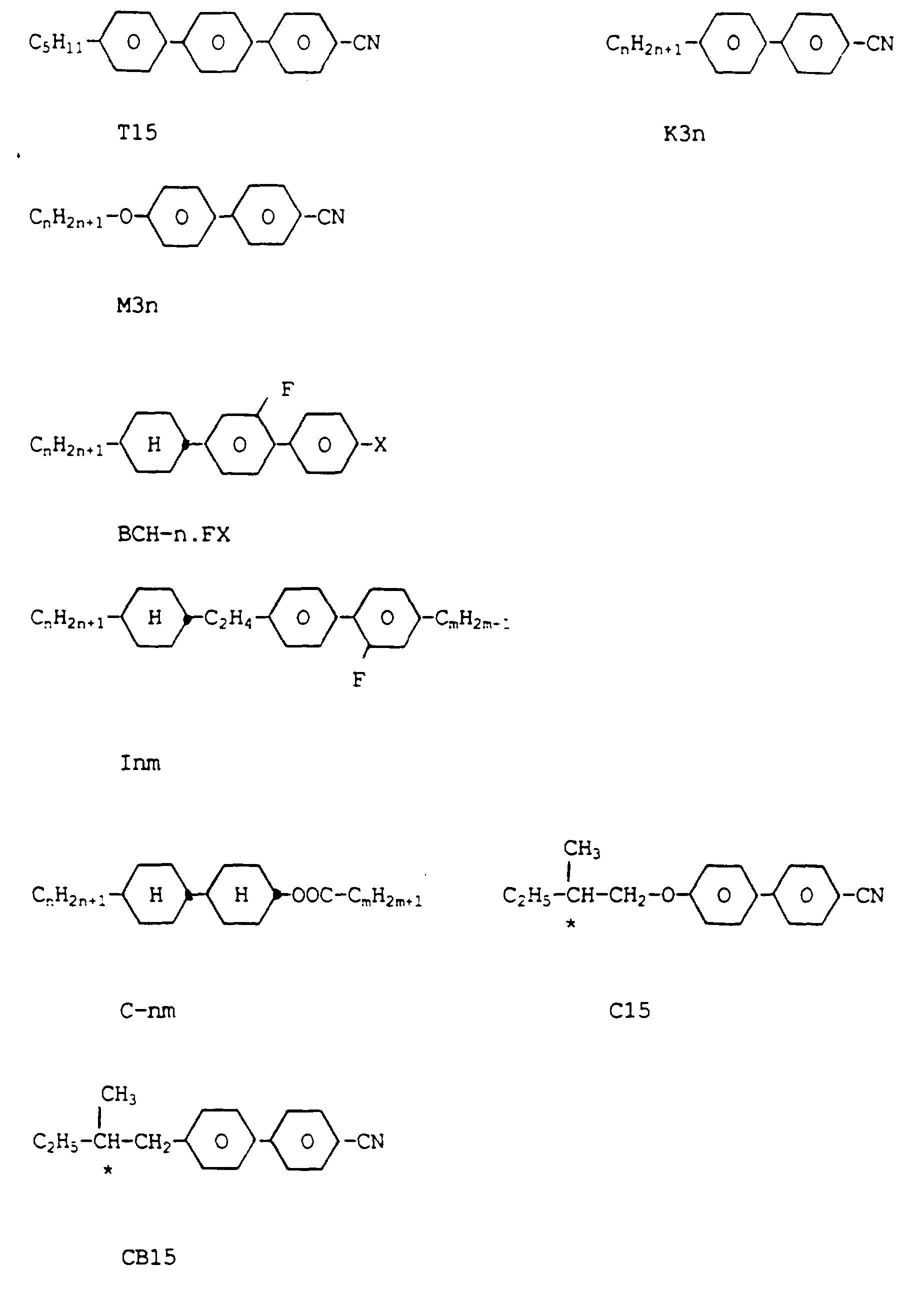

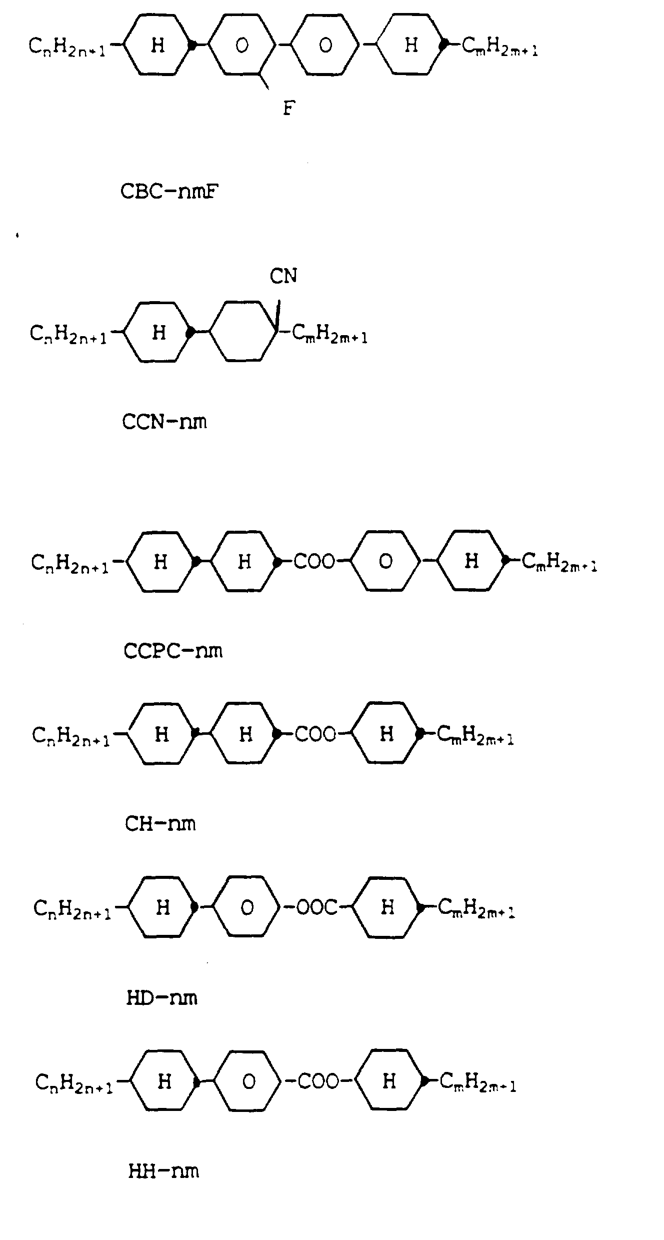

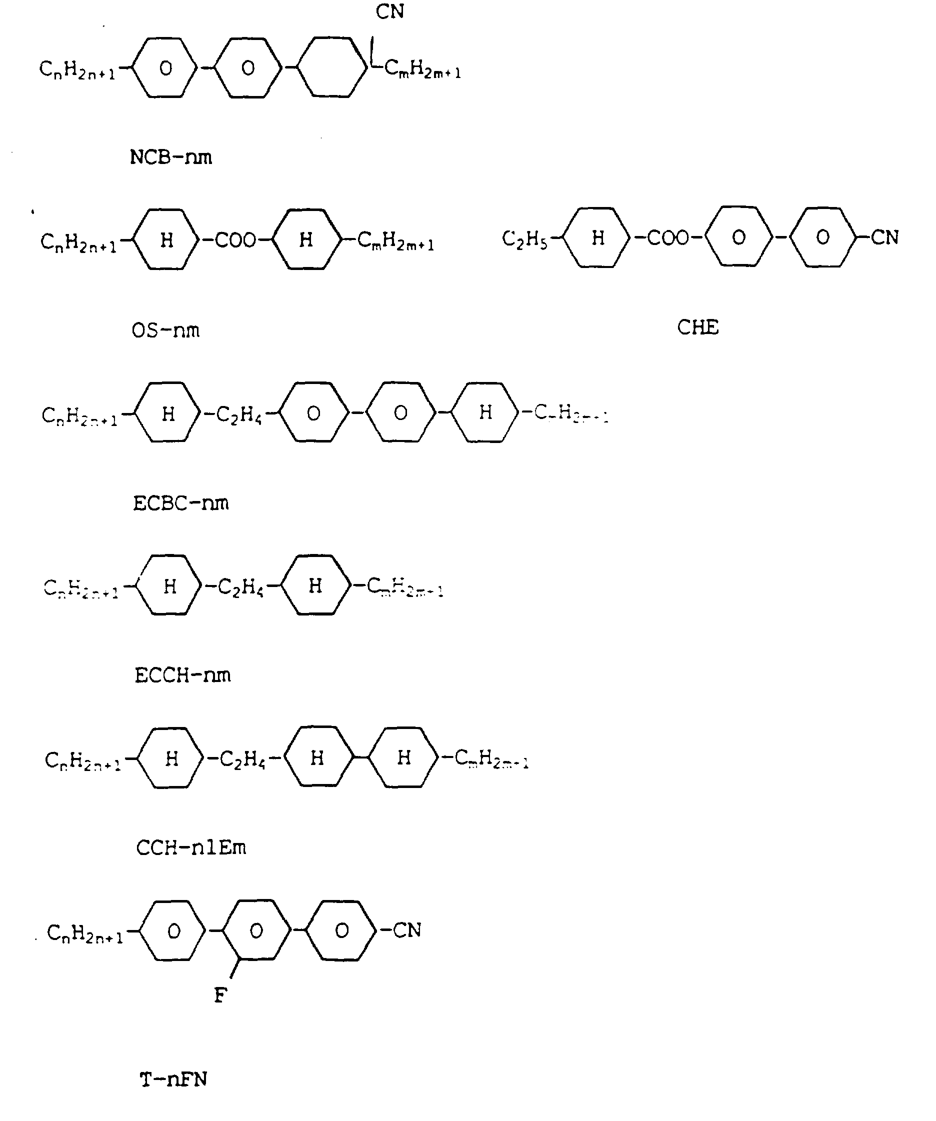

Es folgen Beispiele für erfindungsgemäße Medien:

### Example 1

| | | | |
|---|---|---|---|
| PCH-5F | 5.0 | Clearing point [°C] | +92 |
| PCH-7F | 5.0 | Δ (589 nm, 20 °C) | +0.0913 |
| CCP-20CF3 | 8.0 | n_{ε} (589 nm, 20 °C) | 1.5654 |
| CCP-30CF3 | 9.0 | V_{(10,0,20)}[V] | 1.63 |
| CCP-50CF3 | 9.0 | V_{(50,0,20)} [V] | 2.01 |
| ECCP-3F.F | 8.0 | V_{(90,0,20)} [V] | 2.53 |
| ECCP-5F.F | 8.0 | | |
| CUP-3F.F | 9.0 | | |
| CUP-5F.F | 9.0 | | |
| CCP-30CF2.F.F | 12.0 | | |
| CCP-50CF2 .F.F | 15.0 | | |
| CBC-33F | 3.0 | | |

### Example 2

| | | | |
|---|---|---|---|
| PCH-5F | 5.0 | Clearing point [°C] | +104 |
| PCH-7F | 5.0 | Δn (589 nm, 20 °C) | +0.0953 |
| CCP-20CF3 | 8.0 | n_{ε} (589 nm, 20 °C) | 1.5713 |
| CCP-30CF3 | 8.0 | V_{(10,0,20)} [V] | 1.72 |
| CCP-50CF3 | 8.0 | V_{(50,0,20)} [V] | 2.13 |
| ECCP-3F.F | 8.0 | V_{(90,0,20)} [V] | 2.69 |
| ECCP-5F.F | 8.0 | | |
| CUP-3F.F | 8.0 | | |
| CUP-5F.F | 8.0 | | |
| CCP-30CF2.F.F | 10.0 | | |
| CCP-50CF2 .F.F | 15.0 | | |
| CBC-33F | 3.0 | | |
| CBC-53F | 3.0 | | |
| CBC-55F | 3.0 | | |

### Example 3

| | | | |
|---|---|---|---|
| PCH-5F | 5.0 | Clearing point [°C] | +94 |
| PCH-7F | 5.0 | Δn (589 nm, 20 °C) | +0.0875 |
| CCP-20CF3 | 8.0 | n_{ε} (589 nm, 20 °C) | 1.5590 |
| CCP-30CF3 | 9.0 | V_{(10,0,20)} [V] | 1.72 |
| CCP-50CF3 | 9.0 | V_{(50,0,20)} [V] | 2.15 |
| ECCP-3F.F | 8.0 | V_{(90,0,20)} [V] | 2.81 |
| ECCP-5F.F | 8.0 | | |
| CUP-3F.F | 7.0 | | |
| CUP-5F.F | 7.0 | | |
| CCP-30CF2.F.F | 11.0 | | |
| CCP-50CF2.F.F | 17.0 | | |
| CP-30CF3 | 3.0 | | |
| CP-50CF3 | 3.0 | | |

### Example 4

| | | | |
|---|---|---|---|
| PCH-5F | 8.0 | Clearing point [°C] | +100 |
| PCH-7F | 7.0 | Δn (589 nm, 20 °C) | +0.0896 |
| CCP-20CF3 | 5.0 | n_{ε} (589 nm, 20 °C) | 1.5686 |
| CCP-30CF3 | 6.0 | V_{(10,0,20)} [V] | 1.97 |
| CCP-50CF3 | 6.0 | V_{(50,0,20)} [V] | 2.45 |
| ECCP-3F | 7.0 | V_{(90,0,20)} [V] | 3.17 |
| ECCP-5F | 7.0 | | |
| ECCP-3F.F | 8.0 | | |
| ECCP-5F.F | 7.0 | | |
| CUP-3F.F | 6.0 | | |
| CUP-5F.F | 5.0 | | |
| CCP-30CF2.F.F | 7.0 | | |
| CCP-50CF2.F.F | 13.0 | | |
| CBC-33F | 4.0 | | |
| CBC-53F | 4.0 | | |

### Example 5

| | | | |
|---|---|---|---|
| PCH-301 | 5.0 | Clearing point [°C] | +102 |
| PCH-5F | 5.0 | Δn (589 nm, 20 °C) | +0.0925 |
| PCH-7F | 5.0 | n_{ε} (589 nm, 20 °C) | 1.5700 |
| CCP-20CF3 | 8.0 | V_{(10,0,20)}[V] | 1.86 |
| CCP-30CF3 | 8.0 | V_{(50,0,20)} [V] | 2.30 |
| CCP-50CF3 | 8.0 | V_{(90,0,20)} [V] | 2.92 |
| ECCP-3F.F | 11.0 | | |
| ECCP-5F.F | 10.0 | | |
| CUP-3F.F | 6.0 | | |
| CUP-5F.F | 5.0 | | |
| CCP-30CF2.F.F | 7.0 | | |
| CCP-50CF2.F.F | 13.0 | | |
| CBC-33F | 3.0 | | |
| CBC-53F | 3.0 | | |
| CBC-55F | 3.0 | | |

### Example 6

| | | | |
|---|---|---|---|
| PCH-5F | 4.0 | Clearing point [°C] | +107 |
| PCH-7F | 4.0 | Δn (589 nm, 20 °C) | +0.0841 |
| CCP-20CF3 | 5.0 | n_{ε} (589 nm, 20 °C) | 1.5618 |
| CCP-30CF3 | 7.0 | V_{(10,0,20)} [V] | - |
| CCP-50CF3 | 7.0 | V_{(50,0,20)} [V] | - |
| ECCP-3F | 12.0 | V_{(90,0,20)} [V] | - |
| ECCP-5F | 12.0 | | |
| ECCP-3F.F | 11.0 | | |
| ECCP-5F.F | 11.0 | | |
| CUP-3F.F | 4.0 | | |
| CUP-5F.F | 3.0 | | |
| CCP-30CF2.F.F | 7.0 | | |
| CCP-50CF2.F.F | 13.0 | | |

### Example 7

| | | | |
|---|---|---|---|
| PCH-5F | 6.0 | Clearing point [°C] | +99 |
| PCH-7F | 6.0 | Δn (589 nm, 20 °C) | +0.0838 |
| CCP-20CF3 | 8.0 | n_{ε} (589 nm, 20 °C) | 1.5551 |
| CCP-30CF3 | 9.0 | V_{(10,0,20)} [V] | 1.88 |
| CCP-50CF3 | 9.0 | V_{(50,0,20)} [V] | 2.33 |
| ECCP-3F.F | 11.0 | V_{(90,0,20)} [V] | 3.01 |
| ECCP-5F.F | 10.0 | | |
| CUP-3F.F | 4.0 | | |
| CUP-5F.F | 3.0 | | |
| CCP-30CF2.F.F | 8.0 | | |
| CCP-50CF2.F.F | 14.0 | | |
| CP-20CF3 | 4.0 | | |
| CP-30CF3 | 4.0 | | |
| CP-50CF3 | 4.0 | | |

### Example 8

| | | | |
|---|---|---|---|
| PCH-5F | 7.0 | Clearing point [°C] | +100 |
| PCH-7F | 7.0 | Δn (589 nm, 20 °C) | +0.0907 |
| CCP-20CF3 | 5.0 | n_{ε} (589 nm, 20 °C) | 1.5692 |
| CCP-30CF3 | 6.0 | V_{(10,0,20)} [V] | 1.88 |
| CCP-50CF3 | 6.0 | V_{(50,0,20)} [V] | 2.32 |
| ECCP-3F | 8.0 | V_{(90,0,20)} [V] | 2.94 |
| ECCP-3F.F | 11.0 | | |
| ECCP-5F.F | 11.0 | | |
| CUP-3F.F | 6.0 | | |
| CUP-5F.F | 5.0 | | |
| CCP-30CF2.F.F | 7.0 | | |
| CCP-50CF2.F.F | 13.0 | | |
| CBC-33F | 4.0 | | |
| CBC-53F | 4.0 | | |

### Example 9

| | | | |
|---|---|---|---|
| PCH-5F | 7.0 | Clearing point [°C] | +99 |
| PCH-7F | 6.0 | Δ (589 nm, 20 °C) | +0.1064 |
| CCP-20CF3 | 5.0 | n_{ε} (589 nm, 20 °C) | 1.5903 |
| CCP-30CF3 | 6.0 | V_{(10,0,20)} [V] | 1.82 |
| CCP-50CF3 | 6.0 | V_{(50,0,20)} [V] | 2.23 |
| ECCP-3F | 8.0 | V_{(90,0,20)} [V] | 2.89 |
| BCH-3F.F | 11.0 | | |
| BCH-5F.F | 11.0 | | |
| CUP-3F.F | 6.0 | | |
| CUP-5F.F | 5.0 | | |
| CCP-30CF2.F.F | 7.0 | | |
| CCP-50CF2.F.F | 13.0 | | |
| CBC-33F | 3.0 | | |
| CBC-53F | 3.0 | | |
| CBC-55F | 3.0 | | |

### Example 10

| | | | |
|---|---|---|---|
| PCH-5F | 9.0 | Clearing point [°C] | +88 |
| PCH-7F | 8.0 | Δn (589 nm, 20 °C) | +0.0813 |
| CCP-20CF3 | 8.0 | n_{ε} (589 nm, 20 °C) | 1.5436 |
| CCP-30CF3 | 9.0 | V_{(10,0,20)} [V] | 1.85 |
| CCP-50CF3 | 8.0 | V_{(50,0,20)} [V] | 2.28 |
| ECCP-3F.F | 11.0 | V_{(90,0,20)} [V] | 2.96 |
| ECCP-5F.F | 10.0 | | |
| CUP-3F.F | 4.0 | | |
| CUP-5F.F | 3.0 | | |
| CCP-30CF2.F.F | 8.0 | | |
| CCP-50CF2.F.F | 14.0 | | |
| CP-20CF3 | 4.0 | | |
| CP-30CF3 | 4.0 | | |
| CP-50CF3 | 4.0 | | |

### Example 11

| | | | |
|---|---|---|---|
| PCH-5F | 5.0 | Clearing point [°C] | +101 |
| PCH-7F | 5.0 | Δn (589 nm, 20 °C) | +0.085 |
| CCP-20CF3 | 8.0 | n_{ε} (589 nm, 20 °C) | 1.5560 |
| CCP-30CF3 | 9.0 | V_{(10,0,20)} [V] | 1.77 |
| CCP-50CF3 | 9.0 | V_{(50,0,20)} [V] | 2.20 |
| ECCP-3F.F | 11.0 | V_{(90,0,20)} [V] | 2.77 |
| ECCP-5F.F | 10.0 | | |
| CUP-3F.F | 5.0 | | |
| CUP-5F.F | 4.0 | | |
| CCP-30CF2.F.F | 8.0 | | |
| CCP-50CF2.F.F | 14.0 | | |
| CP-20CF3 | 4.0 | | |
| CP-30CF3 | 4.0 | | |
| CP-50CF3 | 4.0 | | |

### Example 12

| | | | |
|---|---|---|---|
| PCH-5F | 7.0 | Clearing point [°C] | +99 |
| PCH-7F | 7.0 | Δn (589 nm, 20 °C) | +0.0951 |
| CCP-20CF3 | 5.0 | n_{ε} (589 nm, 20 °C) | 1.5761 |
| CCP-30CF3 | 6.0 | V_{(10,0,20)} [V] | 1.90 |
| CCP-50CF3 | 6.0 | V_{(50,0,20)} [V] | 2.34 |
| ECCP-3F | 8.0 | V_{(90,0,20)} [V] | 2.96 |
| ECCP-3F.F | 11.0 | | |
| ECCP-5F.F | 11.0 | | |
| BCH-3F.F | 4.0 | | |
| BCH-5F.F | 4.0 | | |
| CUP-3F.F | 6.0 | | |
| CUP-5F.F | 5.0 | | |
| CCP-30CF2.F.F | 6.0 | | |
| CCP-50CF2.F.F | 6.0 | | |
| CBC-33F | 4.0 | | |
| CBC-53F | 4.0 | | |

### Example 13

| | | | |
|---|---|---|---|
| PCH-5F | 6.0 | Clearing point [°C] | +101 |
| PCH-7F | 6.0 | Δn (589 nm, 20 °C) | +0.0913 |
| CCP-20CF3 | 6.0 | n_{ε} (589 nm, 20 °C) | 1.5590 |
| CCP-30CF3 | 8.0 | V_{(10,0,20)} [V] | 1.84 |
| CCP-50CF3 | 8.0 | V_{(50,0,20)} [V] | 2.28 |
| ECCP-3F | 6.0 | V_{(90,0,20)} [V] | 2.89 |
| ECCP-3F.F | 11.0 | | |
| ECCP-5F.F | 11.0 | | |
| CUP-3F.F | 7.0 | | |
| CUP-5F.F | 6.0 | | |
| CCP-30CF2.F.F | 7.0 | | |
| CCP-50CF2.F.F | 11.0 | | |
| CBC-33F | 3.0 | | |
| CBC-53F | 4.0 | | |

### Example 14

| | | | |
|---|---|---|---|
| PCH-5F | 5.0 | Clearing point [°C] | +103 |
| PCH-7F | 5.0 | Δn (589 nm, 20 °C) | +0.0960 |
| CCP-20CF3 | 6.0 | n_{ε} (589 nm, 20 °C) | 1.5756 |
| CCP-30CF3 | 9.0 | V_{(10,0,20)} [V] | 1.90 |
| CCP-50CF3 | 9.0 | V_{(50,0,20)} [V] | 2.38 |
| ECCP-3F | 8.0 | V_{(90,0,20)} [V] | 3.09 |
| ECCP-3F.F | 10.0 | | |
| ECCP-5F.F | 11.0 | | |
| BCH-3F.F | 4.0 | | |
| BCH-5F.F | 4.0 | | |
| CUP-3F.F | 6.0 | | |
| CUP-5F.F | 6.0 | | |
| CCP-30CF2.F.F | 6.0 | | |
| CCP-50CF2.F.F | 6.0 | | |
| CBC-33F | 2.0 | | |
| CBC-53F | 3.0 | | |

### Example 15

| | | | |
|---|---|---|---|
| PCH-5F | 5.0 | Clearing point [°C] | +103 |
| PCH-7F | 5.0 | Δn (589 nm, 20 °C) | +0.0848 |
| CCP-20CF3 | 8.0 | n_{ε} (589 nm, 20 °C) | 1.5559 |
| CCP-30CF3 | 9.0 | V_{(10,0,20)} [V] | 1.81 |
| CCP-50CF3 | 9.0 | V_{(50,0,20)} [V] | 2.24 |
| ECCP-3F.F | 11.0 | V_{(90,0,20)} [V] | 2.83 |
| ECCP-5F.F | 10.0 | | |
| CUP-3F.F | 5.0 | | |
| CUP-5F.F | 4.0 | | |
| CCP-30CF2.F.F | 8.0 | | |
| CCP-50CF2.F.F | 14.0 | | |
| CP-30CF3 | 6.0 | | |
| CCP-50CF3 | 6.0 | | |
| CBC-33F | 3.0 | | |
| CBC-53F | 3.0 | | |

### Example 16

| | | | |
|---|---|---|---|
| PCH-5F | 4.0 | Clearing point [°C] | +102 |
| PCH-7F | 5.0 | Δn (589 nm, 20 °C) | +0.0949 |
| CCP-20CF3 | 6.0 | n_{ε} (589 nm, 20 °C) | 1.5730 |
| CCP-30CF3 | 7.0 | V_{(10,0,20)} [V] | 1.74 |
| CCP-50CF3 | 8.0 | V_{(50,0,20)} [V] | 2.15 |
| ECCP-3F | 6.0 | V_{(90,0,20)} [V] | 2.71 |
| ECCP-3F.F | 10.0 | | |
| ECCP-5F.F | 10.0 | | |
| CUP-3F.F | 9.0 | | |
| CUP-5F.F | 10.0 | | |
| CCP-30CF2.F.F | 7.0 | | |
| CCP-50CF2.F.F | 11.0 | | |
| CBC-33F | 3.0 | | |
| CBC-53F | 4.0 | | |

### Example 17

| | | | |
|---|---|---|---|
| PCH-5F | 6.0 | Clearing point [°C] | +99 |
| PCH-7F | 6.0 | Δn (589 nm, 20 °C) | +0.0960 |
| CCP-20CF3 | 6.0 | n_{ε} (589 nm, 20 °C) | 1.5751 |
| CCP-30CF3 | 8.0 | V_{(10,0,20)} [V] | 1.79 |
| CCP-50CF3 | 7.0 | V_{(50,0,20)} [V] | 2.21 |
| ECCP-3F.F | 11.0 | V_{(90,0,20)} [V] | 2.81 |
| ECCP-5F.F | 11.0 | | |
| BCH-3F.F | 6.0 | | |
| CUP-3F.F | 7.0 | | |
| CUP-5F.F | 6.0 | | |
| CCP-30CF2.F.F | 7.0 | | |
| CCP-50CF2.F.F | 11.0 | | |
| CBC-33F | 4.0 | | |
| CBC-53F | 4.0 | | |

### Example 18

| | | | |
|---|---|---|---|
| PCH-5F | 7.0 | Clearing point [°C] | +99 |
| PCH-7F | 7.0 | Δn (589 nm, 20 °C) | +0.0964 |
| CCP-20CF3 | 5.0 | n_{ε} (589 nm, 20 °C) | 1.5767 |
| CCP-30CF3 | 6.0 | V_{(10,0,20)} [V] | 1.86 |
| CCP-50CF3 | 6.0 | V_{(50,0,20)} [V] | 2.28 |
| ECCP-3F.F | 15.0 | V_{(90,0,20)} [V] | 2.87 |
| ECCP-5F.F | 14.0 | | |
| BCH-3F.F | 4.0 | | |
| BCH-5F.F | 4.0 | | |
| CUP-3F.F | 6.0 | | |
| CUP-5F.F | 5.0 | | |
| CCP-30CF2.F.F | 6.0 | | |
| CCP-50CF2.F.F | 6.0 | | |
| CBC-33F | 3.0 | | |
| CBC-53F | 3.0 | | |
| CBC-55F | 3.0 | | |

### Example 19

| | | | |
|---|---|---|---|
| PCH-5F | 8.5 | Clearing point [°C] | +87 |
| PCH-6F | 6.8 | Δn (589 nm, 20 °C) | +0.0959 |
| PCH-7F | 5.1 | n_{ε} (589 nm, 20 °C) | 1.5748 |
| CCP-20CF3 | 6.8 | V_{(10,0,20)} [V] | - |
| CCP-30CF3 | 10.2 | V_{(50,0,20)} [V] | - |
| CCP-40CF3 | 6.0 | V_{(90,0,20)} [V] | - |
| CCP-50CF3 | 9.3 | | |
| BCH-3F.F | 10.2 | | |
| BCH-5F.F | 8.5 | | |
| ECCP-30CF.3 | 4.2 | V_{(90,0,20)} [V] | - |
| ECCP-50CF.3 | 4.2 | | |
| CBC-33F | 1.7 | | |
| CBC-53F | 1.7 | | |
| CBC-55F | 1.7 | | |
| CUP-3F.F | 15.0 | | |

### Example 20

| | | | |
|---|---|---|---|
| PCH-5F | 8.5 | Clearing point [°C] | +87 |
| PCH-6F | 6.8 | Δn (589 nm, 20 °C) | +0.0966 |
| PCH-7F | 5.1 | n_{ε} (589 nm, 20 °C) | 1.5706 |
| CCP-20CF3 | 6.8 | V_{(10,0,20)} [V] | - |
| CCP-30CF3 | 10.2 | V_{(50,0,20)} [V] | - |
| CCP-40CF.3 | 6.0 | V_{(90,0,20)} [V] | - |
| CCP-50CF3 | 9.3 | | |
| BCH-3F.F | 10.2 | | |
| BCH-5F.F | 8.5 | | |
| ECCP-30CF.3 | 4.2 | | |
| ECCP-50CF.3 | 4.2 | | |
| CBC-33F | 1.7 | | |
| CBC-53F | 1.7 | | |
| CBC-55F | 1.7 | | |
| CUP-30CF3 | 15.0 | | |

### Example 21

| | | | |
|---|---|---|---|
| PCH-5F | 8.5 | Clearing point [°C] | +83 |
| PCH-6F | 6.8 | Δn (589 nm, 20 °C) | +0.0988 |
| PCH-7F | 5.1 | n_{ε} (589 nm, 20 °C) | 1.5703 |
| CCP-20CF3 | 6.8 | V_{(10,0,20)} [V] | - |
| CCP-30CF3 | 10.2 | V_{(50,0,20)} [V] | - |
| CCP-40CF3 | 6.0 | V_{(90,0,20)} [V] | - |
| CCP-50CF3 | 9.3 | | |
| BCH-3F.F | 10.2 | | |
| BCH-5F.F | 8.5 | | |
| ECCP-30CF3 | 4.2 | | |
| ECCP-50CF3 | 4.2 | | |
| CBC-33F | 1.7 | | |
| CBC-53F | 1.7 | | |
| CBC-55F | 1.7 | | |
| CUP-30CF3 | 15.0 | | |

### Example 22

| | | | |
|---|---|---|---|
| PCH-5F | 6.0 | Clearing point [°C] | +109 |
| PCH-7F | 6.0 | Δn (589 nm, 20 °C) | +0.0870 |
| CCP-20CF3 | 8.0 | n_{ε} (589 nm, 20 °C) | 1.5622 |
| CCP-30CF3 | 9.0 | V_{(10,0,20)} [V] | - |
| CCP-50CF3 | 9.0 | V_{(50,0,20)} [V] | - |
| ECCP-3F.F | 11.0 | V_{(90,0,20)} [V] | - |
| ECCP-5F.F | 10.0 | | |
| CUP-3F.F | 5.0 | | |
| CUP-5F.F | 4.0 | | |
| CCP-30CF2.F.F | 8.0 | | |
| CCP-50CF2.F.F | 14.0 | | |
| CCEP-53 | 10.0 | | |

### Example 23

| | | | |
|---|---|---|---|
| PCH-5F | 6.0 | Clearing point [°C] | +108 |
| PCH-7F | 6.0 | Δn (589 nm, 20 °C) | +0.0866 |
| CCP-20CF3 | 8.0 | n_{ε} (589 nm, 20 °C) | 1.5620 |
| CCP-30CF3 | 9.0 | V_{(10,0,20)} [V] | 1.97 |
| CCP-50CF3 | 9.0 | V_{(50,0,20)} [V] | 2.41 |
| ECCP-3F.F | 11.0 | V_{(90,0,20)} [V] | 2.99 |
| ECCP-5F.F | 10.0 | | |
| CUP-3F.F | 5.0 | | |
| CUP-5F.F | 4.0 | | |
| CCP-30CF2.F.F | 8.0 | | |
| CCP-50CF2.F.F | 14.0 | | |
| CCEP-35 | 5.0 | | |
| CCEP-53 | 5.0 | | |

### Example 24

| | | | |
|---|---|---|---|
| PCH-5F | 8.0 | Clearing point [°C] | +90 |
| PCH-7F | 8.0 | Δn (589 nm, 20 °C) | +0.0821 |
| CCP-20CF3 | 8.0 | n_{ε} (589 nm, 20 °C) | 1.5542 |
| CCP-30CF3 | 9.0 | V_{(10,0,20)} [V] | 1.69 |
| CCP-50CF3 | 8.0 | V_{(50,0,20)} [V] | 2.09 |
| ECCP-3F.F | 11.0 | V_{(90,0,20)} [V] | 2.61 |
| ECCP-5F.F | 10.0 | | |
| CUP-3F.F | 4.0 | | |
| CUP-5F.F | 3.0 | | |
| CCP-30CF2.F.F | 8.0 | | |
| CCP-50CF2.F.F | 14.0 | | |
| CP-30CF3 | 5.0 | | |
| CP-50CF3 | 4.0 | | |

### Example 25

| | | | |
|---|---|---|---|
| PCH-5F | 8.0 | Clearing point [°C] | +89 |
| PCH-6F | 8.0 | Δn (589 nm, 20 °C) | +0.0818 |
| CCP-20CF3 | 8.0 | n_{ε} (589 nm, 20 °C) | 1.5539 |
| CCP-30CF3 | 9.0 | V_{(10,0,20)} [V] | 1.68 |
| CCP-50CF3 | 8.0 | V_{(50,0,20)} [V] | 2.05 |
| ECCP-3F.F | 11.0 | V_{(90,0,20)} [V] | 2.57 |
| ECCP-5F.F | 10.0 | | |
| CUP-3F.F | 4.0 | | |
| CUP-5F.F | 3.0 | | |
| CCP-30CF2.F.F | 8.0 | | |
| CCP-50CF2.F.F | 14.0 | | |
| CP-30CF3 | 5.0 | | |
| CP-50CF3 | 4.0 | | |

### Example 26

| | | | |
|---|---|---|---|
| PCH-5F | 6.0 | Clearing point [°C] | +91 |
| PCH-7F | 5.0 | Δn (589 nm, 20 °C) | +0.0787 |
| CCH-303 | 5.0 | n_{ε} (589 nm, 20 °C) | 1.5503 |
| CCH-501 | 4.0 | V_{(10,0,20)} [V] | 1.80 |
| CCP-20CF3 | 6.0 | V_{(50,0,20)} [V] | 2.21 |
| CCP-30CF3 | 6.0 | V_{(90,0,20)} [V] | 2.75 |
| CCP-40CF3 | 6.0 | | |
| CCP-50CF3 | 6.0 | | |
| ECCP-3F.F | 12.0 | | |
| ECCP-5F.F | 12.0 | | |
| CUP-3F.F | 4.0 | | |
| CCP-30CF2.F.F | 12.0 | | |
| CCP-50CF2.F.F | 12.0 | | |
| CP-30CF3 | 4.0 | | |

### Example 27

| | | | |
|---|---|---|---|
| PCH-5F | 7.0 | Clearing point [°C] | +93 |
| PCH-6F | 7.0 | Δn (589 nm, 20 °C) | +0.1083 |
| PCH-7F | 8.0 | n_{ε} (589 nm, 20 °C) | 1.5954 |
| CCP-20CF3 | 5.0 | V_{(10,0,20)} [V] | 1.80 |
| CCP-30CF3 | 6.0 | V_{(50,0,20)} [V] | 2.22 |
| CCP-50CF3 | 6.0 | V_{(90,0,20)} [V] | 2.86 |
| BCH-3F.F | 12.0 | | |
| BCH-5F.F | 12.0 | | |
| CUP-3F.F | 6.0 | | |
| CUP-5F.F | 5.0 | | |
| CCP-30CF2.F.F | 4.0 | | |
| CCP-50CF2.F.F | 7.0 | | |
| CBC-33F | 4.0 | | |
| CBC-53F | 4.0 | | |
| CBC-55F | 4.0 | | |
| CBC-33 | 3.0 | | |

### Example 28

| | | | |
|---|---|---|---|
| PCH-5F | 6.0 | Clearing point [°C] | +107.2 |
| PCH-7F | 6.0 | Δn (589 nm, 20 °C) | +0.0935 |
| CCP-20CF3 | 8.0 | n_{ε} (589 nm, 20 °C) | 1.5699 |
| CCP-30CF3 | 9.0 | V_{(10,0,20)} [V] | 1.88 |
| CCP-50CF3 | 9.0 | V_{(50,0,20)} [V] | 2.33 |
| ECCP-3F.F | 11.0 | V_{(90,0,20)} [V] | 2.94 |
| ECCP-5F.F | 10.0 | | |
| CUP-3F.F | 5.0 | | |
| CUP-5F.F | 4.0 | | |
| CCP-30CF2.F.F | 8.0 | | |
| CCP-50CF2.F.F | 14.0 | | |
| CBC-33F | 5.0 | | |
| CBC-53F | 5.0 | | |

### Example 29

| | | | |
|---|---|---|---|
| PCH-5F | 5.0 | Clearing point [°C] | +83 |
| PCH-7F | 6.0 | Δn (589 nm, 20 °C) | +0.0903 |
| CCP-20CF3 | 11.0 | n_{ε} (589 nm, 20 °C) | 1.5650 |
| CCP-30CF3 | 12.0 | V_{(10,0,20)} [V] | 1.37 |
| CCP-40CF3 | 10.0 | V_{(50,0,20)} [V] | 1.78 |
| CCP-50CF3 | 12.0 | V_{(90,0,20)} [V] | 2.32 |
| CUP-3F.F | 12.0 | | |
| BCH-5F.F.F | 11.0 | | |
| CCP-3F.F.F | 12.0 | | |
| CCP-5F.F.F | 9.0 | | |

### Example 30

| | | | |
|---|---|---|---|
| PCH-5F | 6.0 | Clearing point [°C] | +85 |
| PCH-7F | 7.0 | Δn (589 nm, 20 °C) | +0.0864 |
| CCP-20CF3 | 12.0 | n_{ε} (589 nm, 20 °C) | 1.5594 |
| CCP-30CF3 | 13.0 | V_{(10,0,20)} [V] | 1.50 |
| CCP-40CF3 | 12.0 | V_{(50,0,20)} [V] | 1.96 |
| CCP-50CF3 | 13.0 | V_{(90,0,20)} [V] | 2.58 |
| CUP-3F.F | 12.0 | | |
| BCH-5F.F.F | 4.0 | | |
| CCP-3F.F.F | 12.0 | | |
| CCP-5F.F.F | 9.0 | | |

### Example 31

| | | | |
|---|---|---|---|
| PCH-5F | 4.0 | Clearing point [°C] | +89 |
| PCH-7F | 5.0 | Δn (589 nm, 20 °C) | +0.0965 |
| CCP-20CF3 | 14.0 | n_{ε} (589 nm, 20 °C) | 1.5562 |
| CCP-30CF3 | 14.0 | V_{(10,0,20)} [V] | 1.47 |
| CCP-40CF3 | 14.0 | V_{(50,0,20)} [V] | 1.91 |
| CCP-50CF3 | 15.0 | V_{(90,0,20)} [V] | 2.49 |
| CUP-3F.F | 11.0 | | |
| CUP-4F.F | 4.0 | | |
| CCP-3F.F.F | 10.0 | | |
| CCP-5F.F.F | 9.0 | | |

### Example 32

| | | | |
|---|---|---|---|
| PCH-5F | 10.0 | Clearing point [°C] | +60 |
| PCH-6F | 7.0 | Δn (589 nm, 20°C) | - |
| PCH-7F | 15.0 | V_{(10,0,20)} [V] | - |
| CCP-20CF3 | 10.0 | V_{(50,0,20)} [V] | - |
| CCP-30CF3 | 12.0 | V_{(90,0,20)} [V] | - |
| CCP-40CF3 | 8.0 | | |
| CCP-50CF3 | 12.0 | | |
| CUP-3F.F | 10.0 | | |
| BCH-5F.F | 16.0 | | |

### Example 33

| | | | |
|---|---|---|---|
| PCH-5F | 5.0 | Clearing point [°C] | +79 |
| PCH-7F | 6.0 | Δn (589 nm, 20 °C) | +0.0970 |
| CCP-20CF3 | 11.0 | n_{ε} (589 nm, 20 °C) | 1.5750 |
| CCP-30CF3 | 12.0 | V_{(10,0,20)} [V] | 1.33 |
| CCP-40CF3 | 10.0 | V_{(50,0,20)} [V] | 1.75 |
| CCP-50CF3 | 12.0 | V_{(90,0,20)} [V] | 2.33 |
| BCH-3F.F.F | 12.0 | | |
| BCH-5F.F.F | 11.0 | | |
| CUP-3F.F | 12.0 | | |
| CCP-5F.F.F | 9.0 | | |

### Example 34

| | | | |
|---|---|---|---|
| PCH-5F | 5.0 | Clearing point [°C] | +84 |
| PCH-7F | 6.0 | Δn (589 nm, 20 °C) | +0.0979 |
| CCP-20CF3 | 11.0 | n_{ε} (589 nm, 20 °C) | 1.5737 |
| CCP-30CF3 | 12.0 | V_{(10,0,20)} [V] | 1.40 |
| CCP-40CF3 | 10.0 | V_{(50,0,20)} [V] | 1.83 |
| CCP-50CF3 | 12.0 | V_{(90,0,20)} [V] | 2.41 |
| BCH-3F.F.F | 12.0 | | |
| BCH-5F.F.F | 11.0 | | |
| CUP-30CF3 | 12.0 | | |
| CCP-5F.F.F | 9.0 | | |

### Example 35

| | | | |
|---|---|---|---|
| PCH-5F | 5.0 | Clearing point [°C] | +83 |
| PCH-7F | 6.0 | Δn (589 nm, 20 °C) | +0.0905 |
| CCP-20CF3 | 11.0 | n_{ε} (589 nm, 20 °C) | 1.5654 |
| CCP-30CF3 | 12.0 | V_{(10,0,20)} [V] | 1.40 |
| CCP-40CF3 | 10.0 | V_{(50,0,20)} [V] | 1.84 |
| CCP-50CF3 | 12.0 | V_{(90,0,20)} [V] | 2.43 |
| CUP-3F.F | 12.0 | | |
| BCH-5F.F.F | 11.0 | | |
| CCP-3F.F.F | 12.0 | | |
| CCP-5F.F.F | 9.0 | | |

### Example 36

| | | | |
|---|---|---|---|
| PCH-5F | 5.0 | Clearing point [°C] | +88 |
| PCH-7F | 6.0 | Δn (589 nm, 20 °C) | +0.0913 |
| CCP-20CF3 | 11.0 | n_{ε} (589 nm, 20 °C) | 1.5633 |
| CCP-30CF3 | 12.0 | V_{(10,0,20)} [V] | 1.49 |
| CCP-40CF3 | 10.0 | V_{(50,0,20)} [V] | 1.93 |
| CCP-50CF3 | 12.0 | V_{(90,0,20)} [V] | 2.54 |
| CUP-30CF3 | 12.0 | | |
| BCH-5F.F.F | 11.0 | | |
| CCP-3F.F.F | 12.0 | | |
| CCP-5F.F.F | 9.0 | | |

### Example 37

| | | | |
|---|---|---|---|
| PCH-5F | 5.0 | Clearing point [°C] | +80 |
| PCH-7F | 6.0 | Δn (589 nm, 20 °C) | +0.0877 |
| CCP-20CF3 | 11.0 | n_{ε} (589 nm, 20 °C) | 1.5621 |
| CCP-30CF3 | 12.0 | V_{(10,0,20)} [V] | 1.56 |
| CCP-40CF3 | 10.0 | V_{(50,0,20)} [V] | 1.91 |
| CCP-50CF3 | 12.0 | V_{(90,0,20)} [V] | 2.43 |
| CUP-3F.F | 12.0 | | |
| CUP-5F.F | 11.0 | | |
| CCP-3F.F.F | 12.0 | | |
| CCP-5F.F.F | 9.0 | | |

### Example 38

| | | | |
|---|---|---|---|
| PCH-5F | 5.0 | Clearing point (°C) | +89 |
| PCH-7F | 6.0 | Δn (589 nm, 20 °C) | +0.0903 |
| CCP-20CF3 | 11.0 | n_{ε} (589 nm, 20 °C) | 1.5590 |
| CCP-30CF3 | 12.0 | V_{(10,0,20)} (V) | 1.60 |
| CCP-40CF3 | 10.0 | V_{(90,0,20)} (V) | 2.03 |
| CCP-50CF3 | 12.0 | V_{(90,0,20)} (V) | 2.63 |
| CUP-30CF3 | 12.0 | | |
| CUP-50CF3 | 11.0 | | |
| CCP-3F.F.F | 12.0 | | |
| CCP-5F.F.F | 9.0 | | |

### Example 39

| | | | |
|---|---|---|---|
| PCH-5F | 5.0 | Clearing point [°C] | +95 |
| PCH-7F | 6.0 | Δn (589 nm, 20 °C) | +0.0970 |
| CCP-20CF3 | 11.0 | n_{ε} (589 nm, 20 °C) | 1.5679 |
| CCP-30CF3 | 12.0 | V_{(10,0,20)} [V] | 1.73 |
| CCP-40CF3 | 10.0 | V_{(50,0,20)} [V] | 2.15 |
| CCP-50CF3 | 12.0 | V_{(90,0,20)} [V] | 2.77 |
| CUP-30CF3 | 12.0 | | |
| CUP-50CF3 | 11.0 | | |
| CCP-3CL.F.F | 12.0 | | |
| CCP-5CL.F.F | 9.0 | | |
| CH-33 | 4.0 | | |

### Example 40

| | | | |
|---|---|---|---|
| PCH-5F | 5.0 | Clearing point [°C] | +76 |
| PCH-7F | 6.0 | Δn (589 nm, 20 °C) | +0.0975 |
| CCP-20CF3 | 11.0 | n_{ε} (589 nm, 20 °C) | 1.5700 |
| CCP-30CF3 | 12.0 | V_{(10,0,20)} [V] | 1.46 |
| CCP-40CF3 | 10.0 | V_{(50,0,20)} [V] | 1.82 |
| CCP-50CF3 | 12.0 | V_{(90,0,20)} [V] | 2.36 |
| CUP-30CF3 | 12.0 | | |
| CUP-50CF3 | 11.0 | | |
| CUP-3F.F | 12.0 | | |
| CUP-5F.F | 9.0 | | |
| CP-30CF3 | 8.0 | | |

### Example 41

| | | | |
|---|---|---|---|
| PCH-5F | 5.0 | Clearing point [°C] | +86 |
| PCH-7F | 6.0 | Δn (589 nm, 20 °C) | +0.0950 |
| CCP-20CF3 | 11.0 | n_{ε} (589 nm, 20 °C) | 1.5708 |
| CCP-30CF3 | 12.0 | V_{(10,0,20)} [V] | 1.58 |
| CCP-40CF3 | 10.0 | V_{(50,0,20)} [V] | 1.98 |
| CCP-50CF3 | 12.0 | V_{(90,0,20)} [V] | 2.58 |
| CUP-3F.F | 12.0 | | |
| CUP-5F.F | 11.0 | | |
| CCP-3CL.F.F | 12.0 | | |
| CCP-5CL.F.F | 9.0 | | |
| CBC-33F | 4.0 | | |

### Example 42

| | | | |
|---|---|---|---|
| PCH-5F | 5.0 | Clearing point [°C] | +97 |
| PCH-7F | 5.0 | Δn (589 nm, 20 °C) | +0.0920 |
| CCP-20CF3 | 11.0 | n_{ε} (589 nm, 20 °C) | 1.5586 |
| CCP-30CF3 | 11.0 | V_{(10,0,20)} [V] | 1.66 |
| CCP-40CF3 | 10.0 | V_{(50,0,20)} [V] | 2.05 |
| CCP-50CF3 | 9.0 | V_{(90,0,20)} [V] | 2.57 |
| CUP-30CF3 | 12.0 | | |
| CUP-50CF3 | 12.0 | | |
| CCP-30CF2.F.F | 10.0 | | |
| CCP-50CF2.F.F | 11.0 | | |
| CH-33 | 4.0 | | |

### Example 43

| | | | |
|---|---|---|---|
| PCH-5F | 8.0 | Clearing point [°C] | +80 |
| PCH-7F | 8.0 | Δn (589 nm, 20 °C) | +0.0892 |
| CCP-20CF3 | 9.0 | n_{ε} (589 nm, 20 °C) | 1.5569 |
| CCP-30CF3 | 10.0 | V_{(10,0,20)} [V] | 1.62 |
| CCP-40CF3 | 9.0 | V_{(50,0,20)} [V] | 2.02 |
| CCP-50CF3 | 10.0 | V_{(90,0,20)} [V] | 2.60 |
| CUP-30CF3 | 12.0 | | |
| CUP-50CF3 | 12.0 | | |
| CCP-30CF2.F.F | 10.0 | | |
| CCP-50CF2.F.F | 11.0 | | |
| CCEPC-35 | 4.0 | | |

### Example 44

| | | | |
|---|---|---|---|
| PCH-5F | 5.0 | Clearing point [°C] | +88 |
| PCH-7F | 6.0 | Δn (589 nm, 20 °C) | +0.0914 |
| CCP-20CF3 | 11.0 | n_{ε} (589 nm, 20 °C) | 1.5590 |
| CCP-30CF3 | 12.0 | V_{(10,0,20)} [V] | 1.73 |
| CCP-40CF3 | 10.0 | V_{(50,0,20)} [V] | 2.10 |
| CCP-50CF3 | 12.0 | V_{(90,0,20)} [V] | 2.61 |
| CUP-30CF3 | 12.0 | | |
| CUP-50CF3 | 11.0 | | |
| CCP-30CF2.F.F | 21.0 | | |
| CCEPC-53 | 4.0 | | |

### Example 45

| | | | |
|---|---|---|---|
| PCH-5F | 8.0 | Clearing point [°C] | +103 |
| CCP-20CF3 | 9.0 | Δn (589 nm, 20 °C) | +0.0913 |
| CCP-30CF3 | 10.0 | n_{ε} (589 nm, 20 °C) | 1.5603 |
| CCP-40CF3 | 9.0 | V_{(10,0,20)}[V] | 1.67 |
| CCP-50CF3 | 12.0 | V_{(50,0,20)} [V] | 2.05 |
| CUP-3F.F | 9.0 | V_{(90,0,20)} [V] | 2.56 |
| CUP-5F.F | 9.0 | | |
| CCP-30CF2.F.F | 10.0 | | |
| CCP-50CF2.F.F | 10.0 | | |
| CP-30CF3 | 7.0 | | |
| CP-50CF3 | 7.0 | | |

### Example 46

| | | | |
|---|---|---|---|
| PCH-5F | 5.0 | Clearing point [°C] | +98 |
| PCH-7F | 5.0 | Δn (589 nm, 20 °C) | +0.0921 |
| CCP-20CF3 | 9.0 | n_{ε} (589 nm, 20 °C) | 1.5591 |
| CCP-30CF3 | 11.0 | V_{(10,0,20)}[V] | 1.59 |
| CCP-40CF3 | 10.0 | V_{(50,0,20)} [V] | 2.02 |
| CCP-50CF3 | 11.0 | V_{(90,0,20)} [V] | 2.61 |
| CUP-30CF3 | 12.0 | | |
| CUP-50CF3 | 12.0 | | |
| CCP-30CF2.F.F | 10.0 | | |
| CCP-50CF2.F.F | 11.0 | | |
| CH-33 | 4.0 | | |

### Example 47

| | | | |
|---|---|---|---|
| PCH-5F | 5.0 | Clearing point [°C] | +98 |
| PCH-7F | 6.0 | Δn (589 nm, 20 °C) | +0.0910 |
| CCP-20CF3 | 9.0 | n_{ε} (589 nm, 20 °C) | 1.5570 |
| CCP-30CF3 | 10.0 | V_{(10,0,20)} [V] | 1.59 |
| CCP-40CF3 | 9.0 | V_{(50,0,20)} [V] | 2.02 |
| CCP-50CF3 | 10.0 | V_{(90,0,20)} [V] | 2.62 |
| CUP-30CF3 | 10.0 | | |
| CUP-50CF3 | 9.0 | | |
| CCP-30CF2.F.F | 12.0 | | |
| CCP-50CF2.F.F | 12.0 | | |
| CP-30CF3 | 8.0 | | |

### Example 48

| | | | |
|---|---|---|---|
| PCH-5F | 5.0 | Clearing point [°C] | +95 |
| PCH-7F | 5.0 | Δn (589 nm, 20 °C) | +0.0941 |
| CCP-20CF3 | 9.0 | n_{ε} (589 nm, 20 °C) | 1.5666 |
| CCP-30CF3 | 11.0 | V_{(10,0,20)} [V] | 1.54 |
| CCP-40CF3 | 10.0 | V_{(50,0,20)} [V] | 1.97 |
| CCP-50CF3 | 11.0 | V_{(90,0,20)} [V] | 2.58 |
| CUP-3F.F | 11.0 | | |
| CUP-5F.F | 10.0 | | |
| CCP-30CF2.F.F | 12.0 | | |
| CCP-50CF2.F.F | 12.0 | | |
| CBC-33F | 4.0 | | |

### Example 49

| | | | |
|---|---|---|---|
| PCH-5F | 5.0 | Clearing point [°C] | +91 |
| PCH-7F | 5.0 | Δn (589 nm, 20 °C) | +0.0934 |
| CCP-20CF3 | 9.0 | n_{ε} (589 nm, 20 °C) | 1.5648 |
| CCP-30CF3 | 11.0 | V_{(10,0,20)} [V] | 1.48 |
| CCP-40CF3 | 10.0 | V_{(50,0,20)} [V] | 1.91 |
| CCP-50CF3 | 11.0 | V_{(90,0,20)} [V] | 2.50 |
| CUP-3F.F | 11.0 | | |
| CUP-5F.F | 10.0 | | |
| CCP-30CF2.F.F | 12.0 | | |
| CCP-50CF2.F.F | 12.0 | | |
| CCUP-3F.F | 4.0 | | |

### Example 50

| | | | |
|---|---|---|---|
| PCH-5F | 5.0 | Clearing point [°C] | +92 |
| PCH-7F | 5.0 | Δn (589 nm, 20 °C) | +0.0933 |
| CCP-20CF3 | 9.0 | n_{ε} (589 nm, 20 °C) | 1.5643 |
| CCP-30CF3 | 11.0 | V_{(10,0,20)} [V] | 1.49 |
| CCP-40CF3 | 10.0 | V_{(50,0,20)} [V] | 1.91 |
| CCP-50CF3 | 11.0 | V_{(90,0,20)} [V] | 2.51 |
| CUP-3F.F | 11.0 | | |
| CUP-5F.F | 10.0 | | |
| CCP-30CF2.F.F | 12.0 | | |
| CCP-50CF2.F.F | 12.0 | | |
| CCUP-30CF3 | 4.0 | | |

### Example 51

| | | | |
|---|---|---|---|
| PCH-5F | 5.0 | Clearing point [°C] | +95 |
| PCH-7F | 5.0 | Δn (589 nm, 20 °C) | +0.0921 |
| CCP-20CF3 | 9.0 | n_{ε} (589 nm, 20 °C) | 1.5638 |
| CCP-30CF3 | 11.0 | V_{(10,0,20)} [V] | 1.55 |
| CCP-40CF3 | 10.0 | V_{(50,0,20)} [V] | 1.99 |
| CCP-50CF3 | 11.0 | V_{(90,0,20)} [V] | 2.61 |
| CUP-3F.F | 11.0 | | |
| CUP-5F.F | 10.0 | | |
| CCP-30CF2.F.F | 12.0 | | |
| CCP-50CF2.F.F | 12.0 | | |
| CCEPC-35F3 | 4.0 | | |

### Example 52

| | | | |
|---|---|---|---|
| PCH-5F | 5.0 | Clearing point [°C] | +95 |
| PCH-7F | 5.0 | Δn (589 nm, 20 °C) | +0.0917 |
| CCP-20CF3 | 9.0 | n_{ε} (589 nm, 20 °C) | 1.5637 |
| CCP-30CF3 | 11.0 | V_{(10,0,20)} [V] | 1.53 |
| CCP-40CF3 | 10.0 | V_{(50,0,20)} [V] | 1.96 |
| CCP-50CF3 | 11.0 | V_{(90,0,20)} [V] | 2.54 |
| CUP-3F.F | 11.0 | | |
| CUP-5F.F | 10.0 | | |
| CCP-30CF2.F.F | 12.0 | | |
| CCP-50CF2.F.F | 12.0 | | |
| CCEPC-53F3 | 4.0 | | |

### Example 53

| | | | |
|---|---|---|---|
| PCH-5F | 5.0 | Clearing point [°C] | +83 |
| PCH-7F | 6.0 | Δn (589 nm, 20 °C) | +0.0881 |
| CCP-20CF3 | 11.0 | n_{ε} (589 nm, 20 °C) | 1.5561 |
| CCP-30CF3 | 12.0 | V_{(10,0,20)} [V] | 1.47 |
| CCP-40CF3 | 10.0 | V_{(50,0,20)} [V] | 1.82 |
| CCP-50CF3 | 12.0 | V_{(90,0,20)} [V] | 2.27 |
| CUP-3F.F | 12.0 | | |
| CUP-5F.F | 11.0 | | |
| CCP-3F.F.F | 12.0 | | |
| CCP-5F.F.F | 9.0 | | |

### Example 54

| | | | |
|---|---|---|---|
| PCH-5F | 10.0 | Clearing point [°C] | +80 |
| PCH-7F | 10.0 | Δn (589 nm, 20 °C) | +0.0870 |
| CCP-20CF3 | 9.0 | n_{ε} (589 nm, 20 °C) | 1.5601 |
| CCP-30CF3 | 11.0 | V_{(10,0,20)} [V] | 1.68 |
| CCP-40CF3 | 10.0 | V_{(50,0,20)} [V] | 2.08 |
| CCP-50CF3 | 11.0 | V_{(90,0,20)} [V] | 2.71 |
| CUP-3F.F | 8.0 | | |
| CUP-5F.F | 7.0 | | |
| CCP-30CF2.F.F | 10.0 | | |
| CCP-50CF2.F.F | 10.0 | | |
| CBC-33F | 4.0 | | |

### Example 55

| | | | |
|---|---|---|---|
| PCH-302 | 4.0 | Clearing point [°C] | +81 |
| PCH-5F | 9.0 | Δn (589 nm, 20 °C) | +0.874 |
| PCH-7F | 9.0 | n_{ε} (589 nm, 20 °C) | 1.5610 |
| CCP-20CF3 | 9.0 | V_{(10,0,20)} [V] | 1.7043 |
| CCP-30CF3 | 11.0 | V_{(50,0,20)} [V] | 2.11 |
| CCP-40CF3 | 10.0 | V_{(90,0,20)} [V] | 2.74 |
| CCP-50CF3 | 11.0 | | |
| CUP-3F.F | 7.0 | | |
| CUP-5F.F | 7.0 | | |
| CCP-30CF2.F.F | 10.0 | | |
| CCP-50CF2.F.F | 9.0 | | |
| CBC-33F | 4.0 | | |

### Beispiel 56

| | | |
|---|---|---|
| PCH-5F | 7.0 | % |
| PCH-7F | 6.0 | % |
| CCP-20CF3 | 5.0 | % |
| CCP-30CF3 | 6.0 | % |
| CCP-50CF3 | 6.0 | % |
| ECCP-3F | 8.0 | % |
| BCH-3F.F | 11.0 | % |
| BCH-5F.F | 11.0 | % |
| CUP-3F.F | 6.0 | % |
| CUP-5F.F | 5.0 | % |
| CCP-30CF2.F.F | 7.0 | % |
| CCP-50CF2.F.F | 13.0 | % |
| CBC-33F | 3.0 | % |
| CBC-53F | 3.0 | % |
| CBC-55F | 3.0 | % |
| | | |
| Klarpunkt: | 100^{o}C | |
| Δn (589 mm, 20^{o}C): | 0.1064 | |
| nₑ | 1.590 | |
| V_{(10,0,20):} | 1.82 V | |
| V_{(50,0,20):} | 2.23 V | |
| V_{(90,0,20):} | 2.85 V | |
| (90^{o} Twist, d. Δn = 0,5) | | |

### Beispiel 57

| | | |
|---|---|---|
| PCH-5F | 8.0 | % |
| PCH-7F | 8.0 | % |
| CCP-20CF3 | 8.0 | % |
| CCP-30CF3 | 9.0 | % |
| CCP-50CF3 | 8.0 | % |
| ECCP-3F.F | 11.0 | % |
| ECCP-5F.F | 10.0 | % |
| CUP-3F.F | 4.0 | % |
| CUP-5F.F | 3.0 | % |
| CCP-30CF2.F.F | 8.0 | % |
| CCP-50CF2.F.F | 14.0 | % |
| CP-30CF3 | 5.0 | % |
| CP-50CF3 | 4.0 | % |
| | | |
| Klärpunkt: | 90^{o}C | |
| Δn (589 mm, 20^{o}C): | 0.0821 | |
| nₑ | 1.554 | |
| V_{(10,0,20):} | 1,69 V | |
| V_{(50,0,20):} | 2.09 V | |
| V_{(90,0,20):} | 2.61 V | |
| (90^{o} Twist, d. Δn = 0.5) | | |

## Patentansprüche

1. Flüssigkristallines Medium auf der Basis eines Gemisches von polaren Verbindungen mit positiver dielektrischer Anisotropie, dadurch gekennzeichnet, daß es 3 bis 80 Gew.-% einer Komponente A aus einer oder mehreren Verbindungen der allgemeinen Formel I 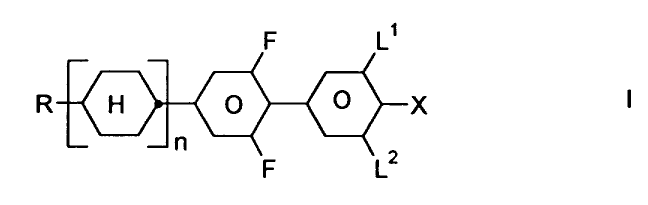 enthält,
worin
n 1,
L¹ und L jeweils H oder F,
X H, F, Cl, CF₃, OCF₃ oder OCHF₂ und
R Alkyl, Oxaalkyl, Fluoralkyl oder Alkenyl mit jeweils bis zu 7 C-Atomen bedeutet
und zusätzlich eine Komponente B, die eine oder mehrere Verbindungen ausgewählt aus der Gruppe bestehend aus den allgemeinen Formeln II, III und IV enthält: 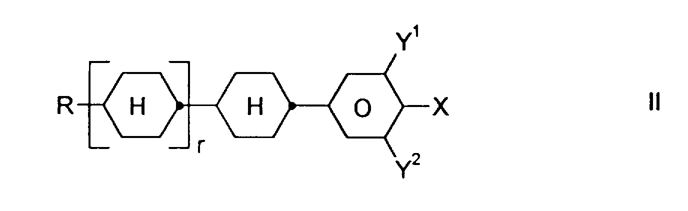 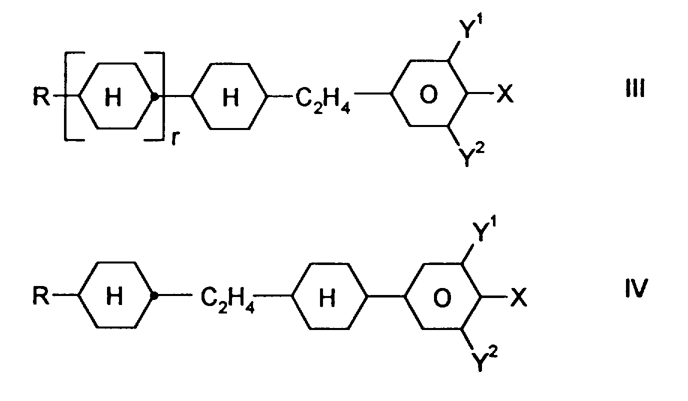 worin die einzelnen Reste die folgenden Bedeutungen haben:
R Alkyl, Oxaalkyl, Fluoralkyl oder Alkenyl mit jeweils bis zu 7 C-Atomen bedeutet,
X F, CI, CF₃, OCF₃ oder OCHF₂,
Y¹ und Y jeweils unabhängig voneinander H oder F,
r 0 oder 1
und/oder eine Komponente C, die eine oder mehrere Verbindungen ausgewählt aus der Gruppe bestehend aus den allgemeinen Formeln V bis VIII enthält: 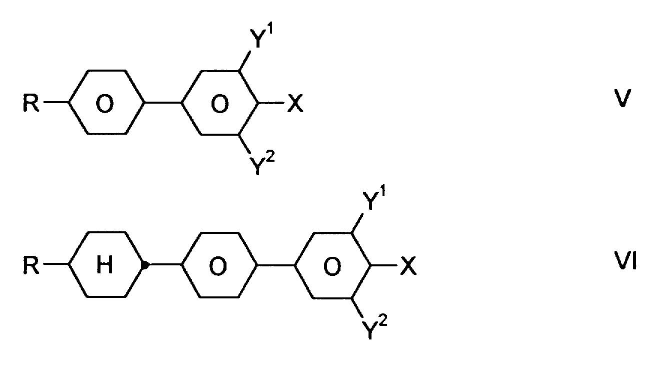 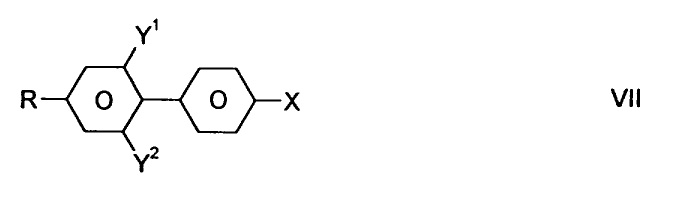 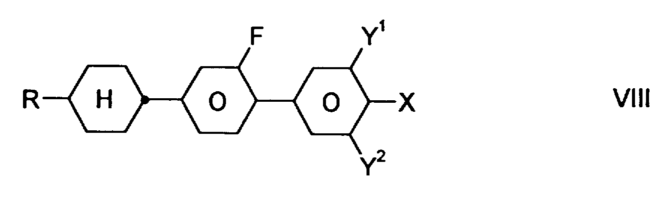 worin R, X, Y¹ und Y jeweils unabhängig voneinander eine der für Komponente B angegebene Bedeutung haben,
mit der Maßgabe für den Fall, daß für Verbindungen der Formel I mindestens einer von L¹ und L F ist, wenn X F und R Alkyl bedeutet.

2. Medium nach Anspruch 1, dadurch gekennzeichnet, daß es zusätzlich eine oder mehrere Verbindungen ausgewählt aus der Gruppe bestehend aus den allgemeinen Formeln IX bis XIV enthält: 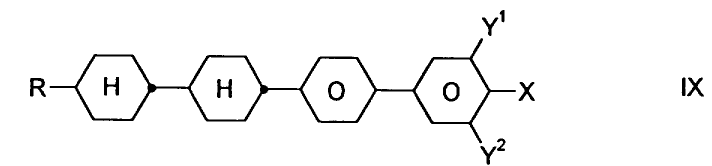 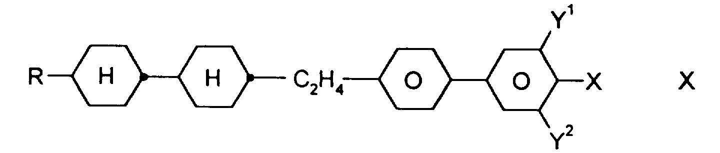 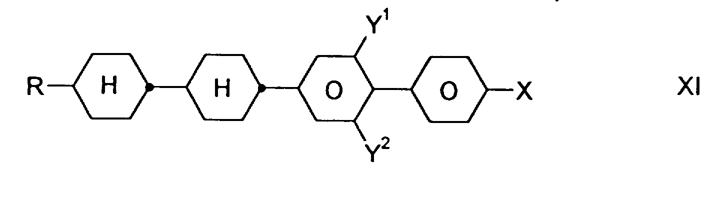 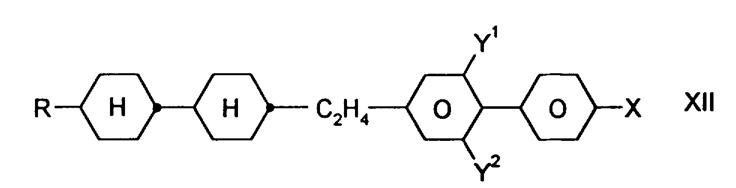 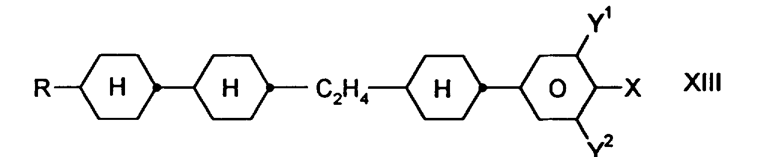 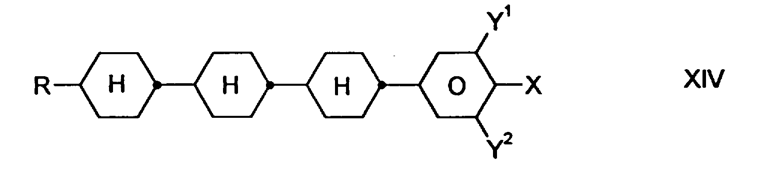 worin R, X, Y¹ und Y jeweils unabhängig voneinander eine der in Anspruch 1 angegebenen Bedeutungen haben.

3. Medium nach Anspruch 1 oder 2, dadurch gekennzeichnet, daß der Anteil an Verbindungen der Formeln I bis IV zusammen im Gesamtgemisch mindestens 50 Gew.-% beträgt.

4. Medium nach mindestens einem der Ansprüche 1 bis 3, dadurch gekennzeichnet, daß der Anteil an Verbindungen der Formel I im Gesamtgemisch 7 bis 40 Gew.-% beträgt.

5. Medium nach mindestens einem der Ansprüche 1 bis 4, dadurch gekennzeichnet, daß der Anteil an Verbindungen der Formeln II bis IV im Gesamtgemisch 20 bis 80 Gew.-% beträgt.

6. Medium nach mindestens einem der Ansprüche 1 bis 5, dadurch gekennzeichnet, daß es im wesentlichen aus Verbindungen ausgewählt aus der Gruppe bestehend aus den allgemeinen Formeln I bis XIV besteht.

7. Verwendung des flüssigkristallinen Mediums nach mindestens einem der Ansprüche 1 bis 6 für elektrooptische Zwecke.

8. Elektrooptische Flüssigkristallanzeige enthaltend ein flüssigkristallines Medium nach mindestens einem der Ansprüche 1 bis 6.

## Claims

1. Liquid-crystalline medium based on a mixture of polar compounds having positive dielectric anisotropy, characterized in that it contains 3 to 80 % by weight of a component A comprising one or more compounds of the general formula I 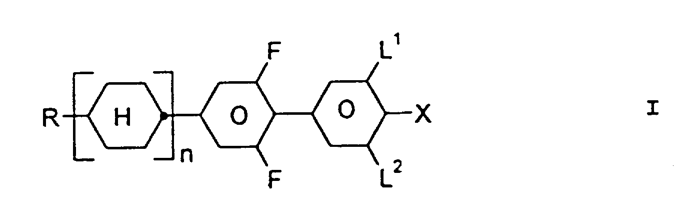 in which
n is 1,
L¹ and L are each H or F,
X is H, F, Cl, CF₃, OCF₃ or OCHF₂, and
R is alkyl, oxaalkyl, fluoroalkyl or alkenyl, in each case having up to 7 carbon atoms
and additionally a component B, which contains one or more compounds selected from the group consisting of the general formulae II, III and IV: 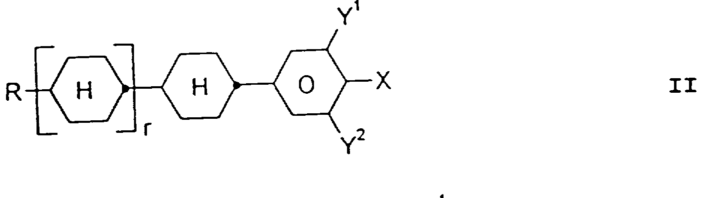 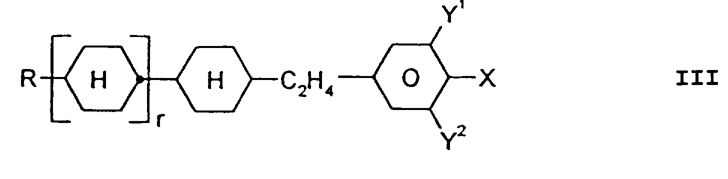 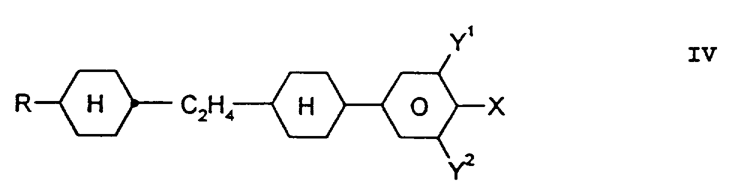 in which the individual radicals are as defined below:
R is alkyl, oxaalkyl, fluoroalkyl or alkenyl, in each case having up to 7 carbon atoms,
X is F, Cl, CF₃, OCF₃ or OCHF₂,
Y¹ and Y are each, independently of one another, H or F
r is 0 or 1
and/or a component C, which contains one or more compounds selected from the group consisting of the general formulae V to VIII: 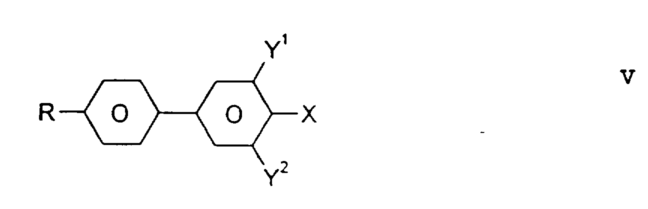 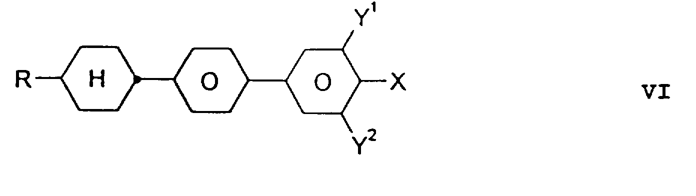 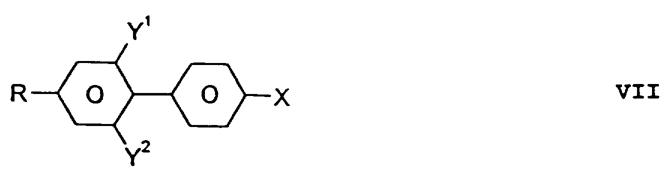 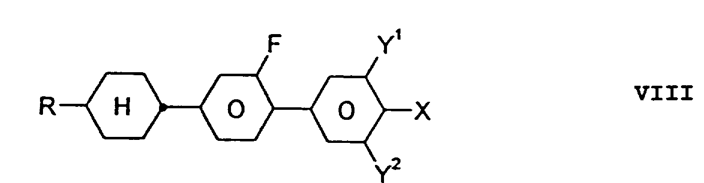 in which R, X, Y¹ and Y are each, independently of one another, as defined for component B.
with the proviso for the case that, for compounds of the formula I, at least one of L¹ and L is F if X is F and R is alkyl.

2. Medium according to Claim 1, characterized in that it additionally contains one or more compounds selected from the group consisting of the general formulae IX to XIV: 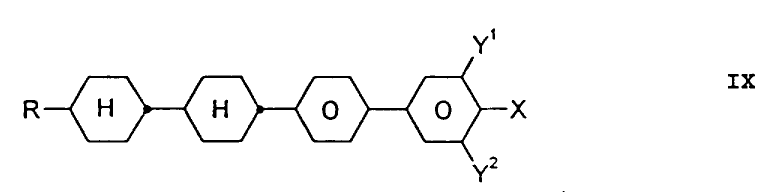 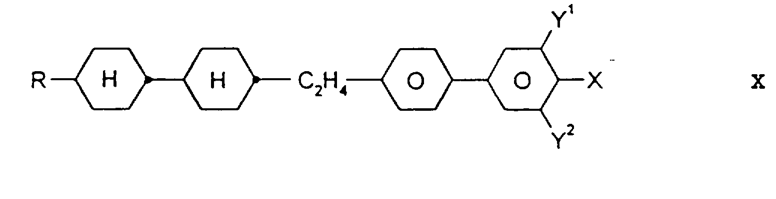 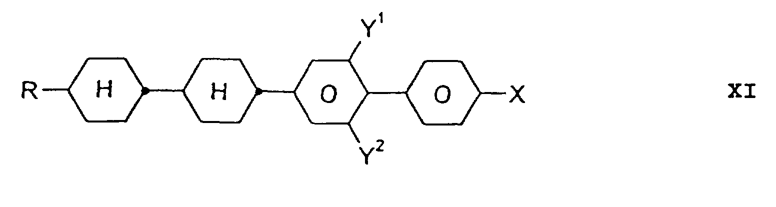 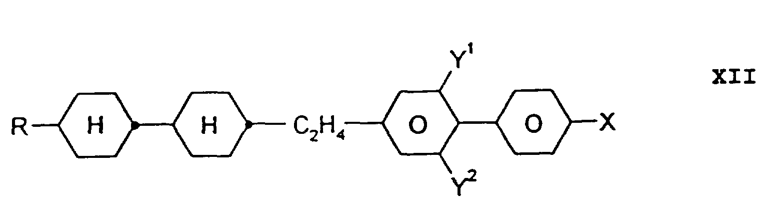 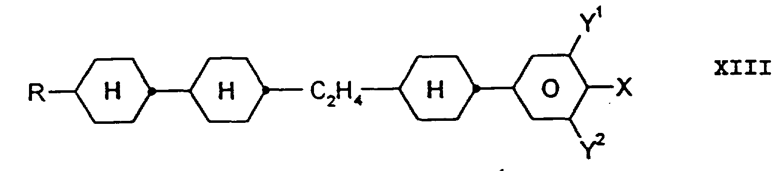 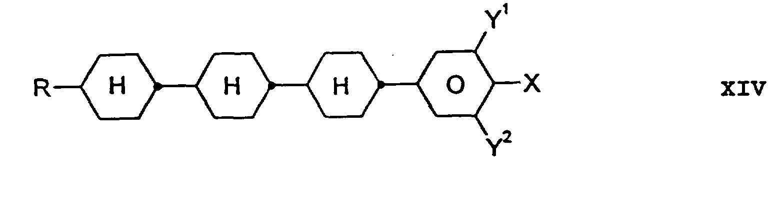 in which R, X, Y¹ and Y are each, independently of one another, as defined in Claim 1.

3. Medium according to Claim 1 or 2, characterized in that the proportion of compounds of the formulae I to IV together is at least 50% by weight in the total mixture.

4. Medium according to at least one of Claims 1 to 3, characterized in that the proportion of compounds of the formula I is from 7 to 40% by weight in the total mixture.

5. Medium according to at least one of Claims 1 to 4, characterized in that the proportion of compounds of the formulae II to IV is from 20 to 80% by weight in the total mixture.

6. Medium according to at least one of Claims 1 to 5, characterized in that it essentially comprises compounds selected from the group comprising the general formulae I to XIV.

7. Use of the liquid-crystalline medium according to at least one of Claims 1 to 6 for electrooptical purposes.

8. Electrooptical liquid-crystal display containing a liquid-crystalline medium according to at least one of Claims 1 to 6.

## Revendications

1. Milieu cristal liquide à base d'un mélange de composés polaires ayant une anisotropie diélectrique positive, caractérisé en ce qu'il contient de 3 à 80 % en poids d'un composant A provenant d'un ou plusieurs composés de formule générale I 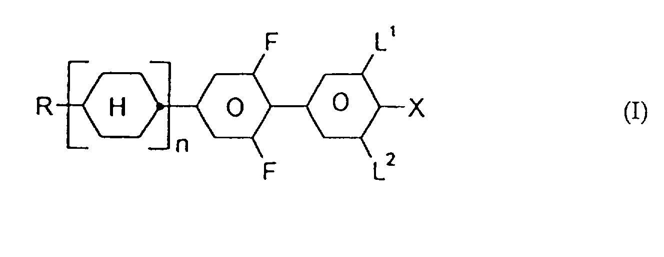 dans laquelle
• n vaut 1,
• L¹ et L sont chacun H ou F,
• X est H, F, Cl, CF₃, OCF₃ ou OCHF₂, et
• R est un radical alkyle, oxaalkyle, fluoralkyle ou alcényle ayant chacun jusqu'à 7 atomes de carbone,
• et de plus un composant B, qui contient un ou plusieurs composés choisis parmi l'ensemble comprenant les formules générales II, III et IV 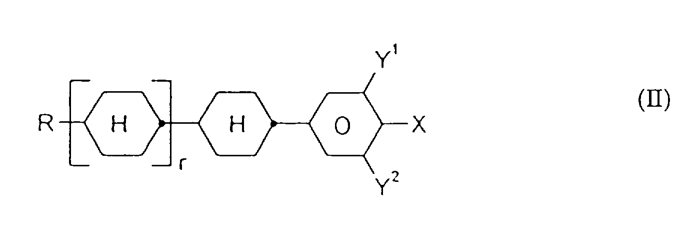 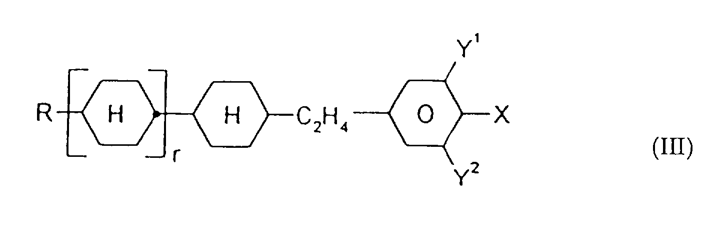 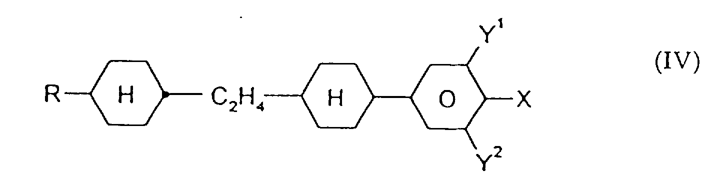 dans lesquelles les différents radicaux ont les significations suivantes :
• R est un radical alkyle, oxaalkyle, fluoralkyle ou alcényle ayant chacun jusqu'à 7 atomes de carbone,
• X est F, Cl, CF₃, OCF₃ ou OCHF₂,
• Y¹ et Y sont, indépendamment l'un de l'autre, chacun H ou F,
• r vaut 0 ou 1,
et/ou un composant C, qui contient un ou plusieurs composés choisis parmi l'ensemble comprenant les formules générales V à VIII: 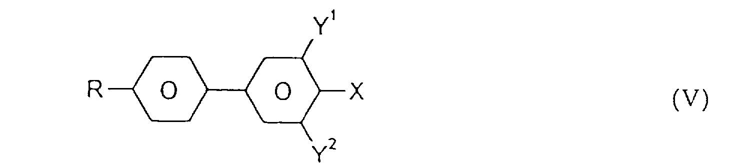 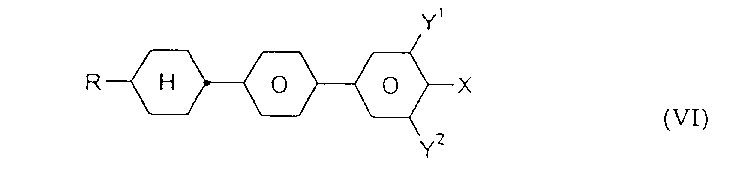 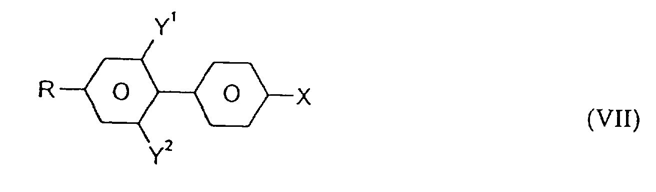 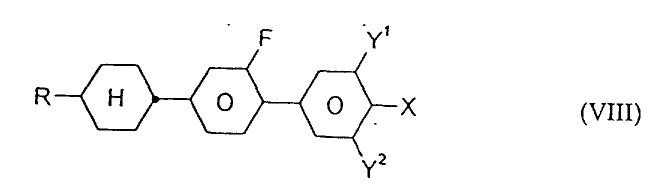 dans lesquelles R, X, Y¹ et Y, indépendamment les uns des autres, ont chacun l'une des significations données pour le composant B, sous réserve que, pour les composés de formule I, au moins l'un des radicaux L¹ et L est F quand X est F et R est un radical alkyle.

2. Milieu selon la revendication 1, caractérisé en ce qu'il contient en outre un ou plusieurs composés choisis parmi l'ensemble comprenant les formules générales IX à XIV: 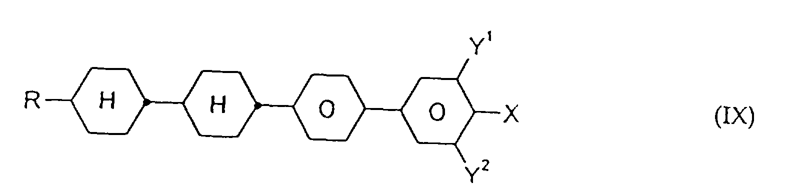 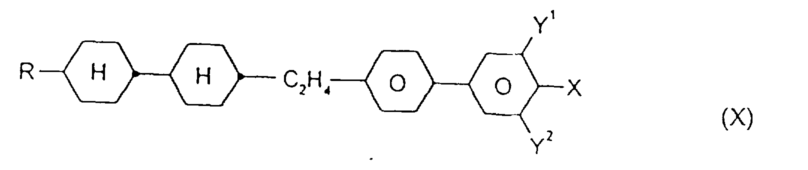 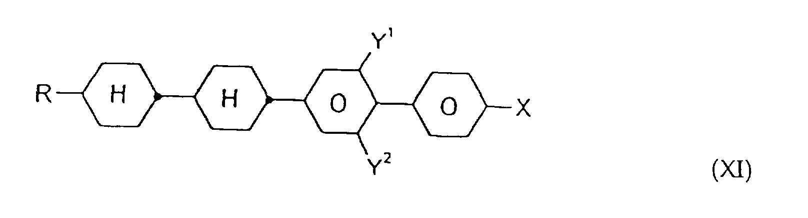 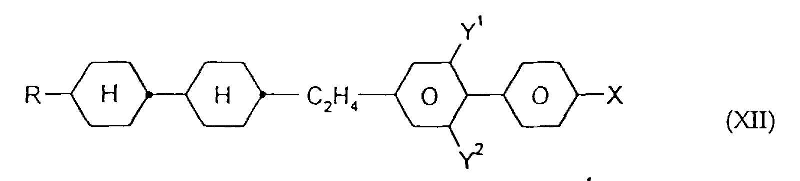 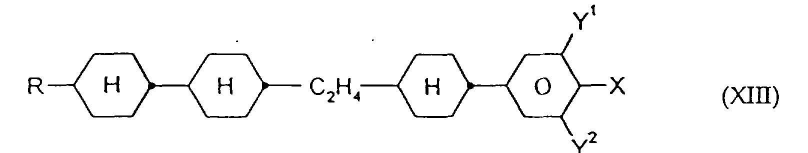 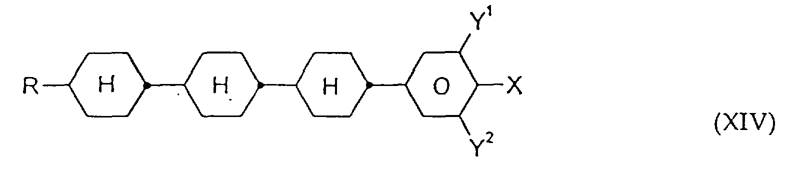 dans lesquelles R, X, Y¹ et Y ont chacun, indépendamment les uns des autres, l'une des significations données dans la revendication 1.

3. Milieu selon la revendication 1 ou 2, caractérisé en ce que la quantité de l'ensemble des composés des formules I à IV, rapportée au mélange total, est d'au moins 50 %.

4. Milieu selon au moins l'une des revendications 1 à 3, caractérisé en ce que la quantité des composés de formule I, rapportée au mélange total, est de 7 à 40 % en poids.

5. Milieu selon au moins l'une des revendications 1 à 4, caractérisé en ce que la quantité des composés de formules II à IV, rapportée au mélange total, est de 20 à 80 % en poids.

6. Milieu selon au moins l'une des revendications 1 à 5, caractérisé en ce qu'il est pour l'essentiel constitué de composés choisis parmi l'ensemble comprenant les formules générales I à XIV.

7. Utilisation du milieu cristal liquide selon au moins l'une des revendications 1 à 6 dans des applications électro-optiques.

8. Dispositif d'affichage électro-optique à cristaux liquides contenant un milieu cristal liquide selon au moins l'une des revendications 1 à 6.
